# EUROPEAN PATENT SPECIFICATION

(11) **EP 2 539 065 B1**
(45) Date of publication and mention of the grant of the patent: **18.04.2018**
(21) Application number: 11705234.0
(22) Date of filing: 16.02.2011
(51) Int. Cl.: B01J 13/00, B01J 13/14, C09B 67/00, C09D 11/02

(54) **PROCESS FOR PREPARING ENCAPSULATED SOLID PARTICLES**
VERFAHREN ZUR HERSTELLUNG EINGEKAPSELTER FESTSTOFFPARTIKEL
PROCÉDÉ DE PRÉPARATION DE PARTICULES SOLIDES ENCAPSULÉES

(30) Priority: 01.10.2010 GB 201016552; 26.02.2010 GB 201003259
(43) Date of publication of application: 02.01.2013
(73) Proprietor: FUJIFILM Imaging Colorants Limited, Manchester M2 7HA (GB)
(72) Inventor: ANNABLE, Tom, Manchester M9 8ZS (GB); O'DONNELL, John, Manchester M9 8ZS (GB); TALLANT, Neil, Manchester M9 8ZS (GB)
(74) Representative: Revell, Christopher
(86) International application number: PCT/GB2011/050297
(87) International publication number: WO 2011/104526

(56) References cited:
- WO-A1-00/39228
- WO-A1-2006/064193
- WO-A1-2008/107658
- WO-A2-2006/132910
- US-A1- 2007 185 003
- US-A1- 2009 111 934

## Description

### Technical field

The present invention relates to solid particles encapsulated with a polyurethane dispersant, and to a process for preparing polyurethane dispersant encapsulated solid particles. When the solid is a pigment, the encapsulated particles are especially useful as the colorant in inks especially ink jet printing inks.

### Introduction

Pigment-based inks generally contain a pigment dispersed in a liquid vehicle. In contrast to dye-based inks the pigment is insoluble in the liquid vehicle.

For pigment-based inks it is particularly desirable to obtain high optical density (OD), especially when the ink is printed onto plain paper. It is also desirable to readily obtain an ink containing a fine (sub micron) dispersion of the pigment particles in the liquid vehicle. Such inks are also desirably colloidally stable during storage or use (e.g. printing). That is to say, that desired inks preferably show little or no flocculation or aggregation of the pigment particles during storage or use. For many inks it is desirable to incorporate significant amounts of water miscible organic solvents. We have found that known pigment dispersions are prone to flocculation in the presence of water miscible organic solvents.

In pigment-based inks the pigment particles are often colloidally stabilised by means of a polymer which acts as a dispersant.

In our own studies on dispersant stabilised pigment-based inks we have found that it is particularly difficult to prepare inks which simultaneously exhibit good colloidal stability and high OD on plain paper. For example, we have found that dispersant stabilised pigment inks known in the art having a high colloidal stability provide a low OD when printed on to plain paper and vice versa.

The ink should also desirably provide durable prints having good wet and dry rubfastness.

We have also found it difficult to obtain inks simultaneously having good wet rub fastness and good OD.

Commercially, there still remains a need for inks which solve, at least in part, one or more of the above problems.

### Prior art

PCT patent publication WO 1999/41320 discloses the use of polyurethane dispersants to stabilise pigment dispersions.

PCT patent publication WO 2006/064193 discloses encapsulated pigments suitable for ink jet printing which have improved colloidal stability.

European patent publications EP 1,614,721 and EP 1,505,128 describe hybrid pigment dispersions containing both styrene-acrylic and polyurethane polymers.

European patent publication EP 1,086,975 and Japanese patent publication 09-104834 disclose encapsulated particles suitable for ink jet printing.

In spite of the above prior art further improvements in properties including pigment dispersion colloidal stability, print optical density, and print durability are still desirable.

### Description of the Invention

According to a first aspect of the present invention there is provided a process for preparing a dispersion of encapsulated solid particles in a liquid medium comprising:
i) comminuting a composition comprising a solid, a liquid medium and a polyurethane dispersant having an acid value of from 1.0 to 2.0 mmoles per g of dispersant, said composition comprising from 5 to 40 parts of polyurethane dispersant per 100 parts of solid, the parts being by weight; and
ii) cross-linking the polyurethane dispersant in the presence of the solid and a liquid medium so as to encapsulate the solid particles;
wherein the polyurethane dispersant contains less than 10% by weight of repeat units from polymeric alcohols, each polymeric alcohol having a number averaged molecular weight of more than 500 daltons.

### Solid

Any suitable solid may be used without particular limitation provided that it can be comminuted to form particles. Preferably, the solid is particulate even prior to comminution.

The solid may comprise and preferably is an inorganic or organic solid material or mixture thereof which is insoluble in the liquid medium. By insoluble we mean a solid having a solubility of no more than 1%, more preferably no more than 0.1% by weight in the liquid medium. The solubility is preferably measured at 20°C. The solubility is preferably measured in water at a neutral pH (7.0).

Examples of suitable solids are extenders and fillers for paints and plastics materials; optical brightening agents; particulate ceramic materials; magnetic particles (e.g. for use in magnetic recording media); metallic particles, polymeric particles, biocides; agrochemicals; pharmaceuticals and colorants.

Preferably, the solid is a colorant. Preferably the colorant is a pigment or an insoluble dye, more preferably a pigment. Accordingly, it is preferred that the solid is or comprises a pigment. We have found that the polyurethane dispersant used in the present invention works especially well as a pigment dispersant.

The pigment may be of any kind suitable for preparing inks. Preferably, the pigment is organic or inorganic.

The pigment may be any of the classes of pigments described in the Third Edition of the Colour Index (1971) and subsequent revisions of, and supplements thereto, under the chapter headed "Pigments".

Examples of suitable organic pigments are those from the azo (including disazo and condensed azo), thioindigo, indanthrone, isoindanthrone, anthanthrone, anthraquinone, isodibenzanthrone, triphendioxazine, quinacridone and phthalocyanine series, especially copper phthalocyanine and its nuclear halogenated derivatives, and also lakes of acid, basic and mordant dyes. Preferred organic pigments are phthalocyanines, especially copper phthalocyanine pigments, azo pigments, indanthrones, anthanthrones, quinacridones pigments.

Preferred inorganic pigments include: metal oxides, sulfides, nitrides and carbides (e.g. titanium dioxide and silicon dioxide), metallic pigments (e.g. aluminium flake) and especially carbon black. Of these carbon black is particularly preferred.

Preferred carbon blacks are the gas blacks especially those sold under the Nipex^{RTM} tradename by Evonik.

Preferably, the carbon black has an average primary particle size of from 16 to 22nm. Preferably, the carbon black has a surface area of from 140 to 220m²/g.

In the case of carbon black pigments, these may be prepared in such a fashion that some of the carbon black surface has oxidized groups (e.g. carboxylic acid and/or hydroxy groups). However, the amount of such groups is preferably not so high that the carbon black may be dispersed in water without the aid of a dispersant.

Preferably, the pigment is a cyan, magenta, yellow or black pigment.

The pigment may be a single chemical species or a mixture comprising two or more chemical species (e.g. a mixture comprising two or more different pigments). In other words, two or more different pigments may be used in the process of the present invention. Where two or more pigments are used these need not be of the same colour or shade.

Preferably, the solid is not dispersible in an aqueous liquid medium (especially pure water) without the aid of a dispersant, i.e. the presence of a dispersant is required to facilitate dispersion. Preferably, the solid is not chemically surface treated, for example by having ionic groups covalently bonded to its surface (especially not -CO₂H or -SO₃H).

Prior to comminution the solid preferably has an average particle size of greater than or equal to 1 micron. Typically prior to comminution the solid has an average particle size of from 1 to 100 microns.

The average size is preferably a volume average size. The particle size is preferably measured by for example a laser light scattering method. Suitable instruments for which include those sold by Malvern and Coulter.

### Polyurethane dispersant

Prior to cross-linking the polyurethane dispersant preferably has a number average molecular weight of from 1,000 to 500,000, more preferably from 5,000 to 100,000, especially from 10,000 to 50,000 and most especially from 10,000 to 30,000. The molecular weight may be established by any suitable method including laser light scattering, vapour pressure osmometry or gel permeation chromatography (GPC). Of these GPC is preferred. The acid value of the dispersant is from 1.0 to 2.0, more preferably from 1.0 to 1.5, especially from 1.0 to 1.4 and most especially from 1.1 to 1.3 mmoles per g of dispersant.

The term polymeric alcohols as used herein means mono functional and polyfunctional alcohols having a number average molecular weight of more than 500 daltons. Examples of polymeric alcohols include polyalkyleneoxides (especially polyethyleneoxide and polypropyleneoxide), polycarbonate alcohols, acrylic alcohols, styrene-acrylic alcohols, and polyester alcohols (especially polycaprolactone alcohols). Preferred polymeric alcohols are mono and diols. The number averaged molecular weight of the polymeric alcohol can be measured by suitable methods such as vapour pressure osmometry, mass spectrometry, multiple angle laser light scattering and especially gel permeation chromatography (GPC). Of these GPC is preferred. In all cases where GPC is used it is preferred that polystyrene standards are used in the calibration.

In some cases it is preferred that the polyurethane dispersant contains less than 5%, especially less than 1% and most especially 0% by weight of repeat units from polymeric alcohols. This is especially so when the polymeric alcohols each have non-ionic water-dispersing groups. An example of a non-ionic water-dispersing group is a polyetheneoxy group.

### Polyurethane dispersant synthesis

The polyurethane dispersant may be obtained from commercial sources, equally the polyurethane dispersant may be prepared by the well known reaction of an isocyanate and an alcohol, especially a diisocyanate and a diol.

The polyurethane dispersant is preferably obtained from the reaction of a mixture comprising the components:
i) at least one diisocyanate; and
ii) at least one diol.

The polyurethane dispersant may be prepared by reacting components i) and ii) in any suitable manner. Substantially anhydrous conditions are preferred. Temperatures of from 30°C and 130°C are preferred and the reaction is continued until the reaction between isocyanate groups in component i) and the hydroxy groups in component ii) is substantially complete.

The polyurethane dispersant may be directly obtained from the above reaction or further reactions e.g. chain extension may employed. When chain extension is employed the initial polymer is often referred to as a prepolymer. The prepolymer is then chain extended.

When the polyurethane dispersant is obtained directly from the above reaction mixture (without chain extension) it is preferred that the relative amounts of components i) and ii) are selected such that the molar ratio of hydroxy groups to isocyanate groups is from 1.01:1 to 2.00:1, more preferably from 1.01:1 to 1.50:1, especially from 1.01:1 to 1.30:1 and most especially from 1.01 to 1.2:1. The result is a hydroxy functional polyurethane dispersant.

Especially when chain extension is to be employed the relative amounts of components i) and ii) to prepare a prepolymer are preferably selected such that the mole ratio of isocyanate groups to hydroxy groups is from 1.1:1 to 2.0:1, more preferably 1.15:1 to 2.0:1 and especially from 1.2:1 to 2.0:1. The result is an isocyanate functional polyurethane dispersant. This dispersant may then be readily subsequently chain extended.

Of the two possibilities, the process using chain extension of a prepolymer is preferred as it more readily achieves the desired final polyurethane dispersant molecular weights.

The polyurethane dispersant may be prepared, for example, in solvent or as a melt. Preferred solvents for the synthesis of the polyurethane dispersant include sulfolane and cyclic amides (especially n-methyl pyrrolidone).

If desired a catalyst may be used to assist formation of the polyurethane dispersant. Suitable catalysts include butyl tin dilaurate, stannous octoate and tertiary amines as is well known in the art.

Preferably, the process either does not use a catalyst or the process uses a metal-free catalyst. This has the advantage of avoiding contamination of the resultant polyurethane dispersant with metal from a metal-containing catalyst. Metals such as those commonly used in catalysts can adversely affect ink jet print heads, particularly the print heads used in thermal ink jet printers.

### Isocyanates

The diisocyanate may be an aliphatic (including linear, branched and cycloaliphatic diisocyanates) or an aromatic diisocyanate.

Examples of suitable diisocyanates include ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate.

Mixtures of the diisocyanates can be used, particularly isomeric mixtures of the toluene diisocyanates or isomeric mixtures of the diphenylmethane diisocyanates (or their hydrogenated derivatives), and also organic polyisocyanates which have been modified by the introduction of urethane, allophanate, urea, biuret, carbodiimide, uretonimine or isocyanurate residues.

Preferred diisocyanates include cycloaliphatic polyisocyanates, especially isophorone diisocyanate, and aliphatic isocyanates, especially 1,6-hexamethylene diisocyanate or hydrogenated 4,4-diphenyl methyl diisocyanate. Isophorone diisocyanate is especially preferred.

In addition to the diisocyanates the reaction mixture may also comprise monoisocyanates and/or isocyanates having three or more isocyanate groups (tri- or higher isocyanates).

Preferably, the majority by weight of all the polyisocyanates present in the reaction mixture are di-isocyanates.

A small amount of tri- or higher- isocyanates may be included as part of the reaction mixture but this amount preferably does not exceed 5%, more preferably it does not exceed 1% by weight relative to the total weight of all isocyanates present in the reaction mixture. In a preferred embodiment the reaction mixture comprises a mixture of 95 to 100% by weight of one or more diisocyanates and from 0 to 5% by weight (preferably 0%) of one or more tri- or higher- isocyanates, wherein the percentages are by weight relative to the weight of all the polyisocyanates present in the reaction mixture.

### Diols

The diols may be polymeric (having a number averaged molecular weight of more than 500) or nonpolymeric.

The diols may be aromatic or aliphatic (including linear, branched and cyclo aliphatic).

Preferred nonpolymeric diols include trimethylene glycol, ethyleneglycol, propylene glycol, 1,4-butanediol, 1,5-pentanediol, 1,6-hexanediol, neopentyl glycol, diethylene glycol, dipropylene glycol, 1,2-propylene glycol, 1,4-cyclohexanedimethanol, 1,4-cyclohexanediol, 1,4-bis(2-hydroxyethoxy) benzene, bis(2-hydroxyethyl)terephthalate, paraxylylenediol, glycerol monoesters, cyclohexanedimethanol, ethyleneoxide and propylene oxide extended hydrogenated bisphenol A, dihydroxy alkanoic acids (especially 2,2- dimethylol propionic acid) and mixtures of two or more thereof. Of these ethylene glycol is especially preferred.

Preferred polymeric diols include polyetherdiols (polyethylenoxide, polypropyleneoxide, polybutyleneoxide), polylesterdiols (polycaprolactone diols), acrylic diols, styrene-acrylic diols and polycarbonate diols.

In one case, the diols used to prepare the polyurethane dispersant (component ii) comprise one or more nonpolymeric diols but less than 5%, preferably less than 1% and especially 0% by weight of one or more polymeric diols relative to all the diols present in component (ii) of the reaction mixture.

Polyol compounds having three or more hydroxy groups may be present in the reaction mixture, preferably in low levels not exceeding 5% by weight relative to the total of all the alcohols present in the reaction mixture.

Preferably, the reaction mixture comprises 95 to 100% of one or more diols and 0 to 5% (preferably 0%) of one or more tri- or higher- alcohols, wherein the percentages are by weight relative to all the alcohols present in the reaction mixture.

Small amounts of monoalcohols may also be present in the reaction mixture although these are preferably absent.

### Optional amines

In addition to components i) and ii) the polyurethane reaction mixture may optionally also comprise at least one amine.

Examples of suitable amines include organic amines (especially organic diamines), hydrazine and hydrazides (especially dihydrazides). One suitable class of organic amines are the polyoxyalkyleneamines especially those sold under the Jeffamine^{RTM} tradename which are available from Huntsman. Especially preferred are the Jeffamine^{RTM} D series materials.

Preferably, the ratio of total molar amount of amines present to total alcohols in the polyurethane reaction mixture is from 0.01 to 1:1, more preferably from 0.01 to 0.5:1 and especially 0.01 to 0.3 to 1.

### Water disipersing groups

The final polyurethane dispersant preferably contains water-dispersing groups within its structure.

The water-dispersing groups may be ionic (cationic and more preferably anionic groups), non-ionic or a mixture of ionic and non-ionic dispersing groups.

Preferred ionic water-dispersing groups include quaternary ammonium groups, sulphonic acid groups and carboxylic acid groups. Of these anionic and especially carboxylic acid water-dispersing groups are preferred.

When present, preferred non-ionic water dispersing groups are polyethyleneoxy groups.

Preferably, the water-dispersing groups are incorporated into the polyurethane dispersant in the form of an isocyanate reactive compound bearing the appropriate water-dispersing groups. Preferred isocyanate-reactive compounds providing dispersing groups include diols having one or more carboxylic acid groups, more preferably dihydroxy alkanoic acids, especially 2,2-dimethylol propionic acid.

Preferably, the anionic water-dispersing groups are used in sufficient amount to obtained the dispersant acid values previously described as being preferred.

The carboxylic and sulphonic acid groups may be subsequently fully or partially neutralised with a base or compound containing a cationic charge to give a salt. If the carboxylic or sulphonic acid groups are used in combination with a non-ionic water-dispersing group, neutralisation may not be required. The conversion of any free acid groups into the corresponding salt may be effected prior to, during the preparation of the polyurethane dispersant or after the preparation of the dispersant (e.g. during the preparation of the final ink).

Preferably, the base used to neutralise any acid water-dispersing groups is ammonia, an amine or an alkaline metal base. Suitable amines are tertiary amines, for example triethylamine or triethanolamine. Suitable alkaline metal bases include alkaline metal hydroxides, hydrogen carbonates and carbonates, for example lithium hydroxide, sodium hydroxide, or potassium hydroxide. A quaternary ammonium hydroxide, for example N⁺(CH₃)₄OH⁻, can also be used. Generally a base is used which gives the required counter ion desired for the ink which is prepared from the polyurethane. For example, suitable counter ions include Li⁺, Na⁺, K⁺, NH₄⁺ and substituted ammonium salts. The potassium salt of the dispersant is especially preferred.

Non-ionic water-dispersing groups may be in-chain or pendant groups. The non-ionic water-dispersing groups may be introduced into the polyurethane dispersant in the form of a compound bearing non-ionic water-dispersing groups and at least two isocyanate-reactive groups.

In one case, the diols used to prepare the polyurethane dispersant (component ii) comprise one or more nonpolymeric diols each having no non-ionic water-dispersing groups but less than 5%, preferably less than 1% and especially 0% by weight of one or more polymeric diols each having non-ionic water dispersing groups, wherein the weight percent is relative to all the diols present in component (ii) of the reaction mixture.

In some cases it is desirable that the polyurethane dispersant comprises no non-ionic water-dispersing groups. Thus for example in such an instance it is preferred that the reaction mixture contains no polyethyleneoxy alcohols.

For example the reaction mixture might be free of a polyethyeneoxy alcohol having an number averaged molecular weight (Mn) of 500 or more.

The nature and amount of the water-dispersing groups in the polyurethane dispersant influences whether a solution, dispersion, emulsion or suspension is formed on dissipation of the final polyurethane dispersant. Preferably, sufficient water-dispersing groups are present in the final polyurethane dispersant such that the dispersant is soluble or readily self dispersible in water when fully neutralised.

### Chain extension

When chain extension is employed to increase the molecular weight of the polyurethane dispersant (prepolymer) it is preferably performed in an aqueous liquid. Temperatures of 5 to 80°C, more preferably 15 to 60°C are preferred. The time for which the chain extension is conducted depends to some extent on the molecular weight required for the final polyurethane dispersant.

Preferred chain extension agents include hydrazine, hydrazide and/or a diamine as the chain extending agent.

Other suitable chain extending agents include polyoxyalkyleneamines, especially those available under the Jeffamine^{RTM} tradename which are available from Huntsman. Especially preferred are the Jeffamine^{RTM} D series materials.

Diamino compounds which may be used as chain-extension agents are preferably aliphatic, saturated, open-chain or cyclic diamines with 2 to 10 carbon atoms; e.g. cyclohexylenediamine, isophoronediamine, ethylenediamine, propylene-1,2- or -1,3-diamine, hexamethylenediamine and 2,2,4- and/or 2,4,4-trimethylhexylene-1,6-diamine, among which the lower molecular open-chain diamines with 2 to 6 carbon atoms, in particular ethylenediamine, propylene-1,3-diamine and propylene-1,2-diamine, and isophoronediamine are preferred. Alternatively, hydrazine and hydrazides may be used as chain extension agents for the polyurethane dispersant, these being preferably employed in the form of the hydrate.

The chain extension is conducted in such a way that the desired number averaged molecular weight (Mn) for the polyurethane dispersant is achieved. One may assess whether the desired Mn has been achieved by Gel permeation chromatography ("GPC"). If desired for chain extension there may be employed a diol instead of the diamino compound, e.g. a C₂₋₆ -alkane diol. Examples of suitable diols include trimethylene glycol, ethanediol, 1,6-hexanediol, neopentylglycol, diethylene glycol, dipropylene glycol, 1,4-butanediol, 1,2-propylene glycol, 1,4-cyclohexanediamethylol, 1,4-cyclohexanediol, 1,4-bis(2-hydroxyethoxy) benzene, bis(2-hydroxyethyl)terephthalante, paraxylylenediol, and mixtures of two or more thereof.

The polyurethane dispersant may be branched but is preferably linear.

In one case, the total number of moles of isocyanate groups to the total number of moles of chain extender groups used in the polyurethane reaction mixture to prepare the polyurethane is from 1:1 to 3:1, more preferably 1.05:1 to 2.8:1, especially 1.1:1 to 2.7:1, more especially 1.2:1 to 2.6:1.

In another case the total number of moles of isocyanate groups to the total number of moles of chain extender groups used in the polyurethane reaction mixture to prepare the polyurethane is from 1:1.01 to 1:1.7, more preferably from 1:1.05 to 1:1.5 and especially from 1:1.1 to 1:1.4 of the isocyanate groups present in the polyurethane prepolymer on a molar basis.

Preferred chain extender groups are -NH₂ or -NHNH₂.

### End-capping

In some cases it is desirable to prepare a polyurethane dispersant containing an end-capping agent. End-capping agents are monofunctional compounds which react with isocyanate or alcohol groups. End-capping agents can also be used in conjunction with chain extending agents (as mentioned above). Polyurethane dispersants may be prepared by reacting a composition comprising at least one diisocyanate, at least one diol and at least one end-capping agent optionally with at least one chain extending agent.

It is sometimes preferred to prepare a polyurethane dispersant by:
i) preparing a prepolymer by reacting a composition comprising at least one diisocyanate and at least one diol;
ii) reacting the prepolymer with at least one end-capping agent and optionally at least one chain extending agent.

When step ii) uses both end-capping and chain extension these may be performed simultaneously or separately. In some cases it is desirable to first end-cap a small proportion of the prepolymer's alcohol or isocyanate groups and then to chain extend the remaining alcohol or isocyanate groups. In some instances it is preferred to simultaneously react with an end-capping agent and a chain extending agent.

In one case, the prepolymer is isocyanate functional and the end-capping agents react with the isocyanate groups.

Preferred end-capping agents which are reactive towards isocyanate groups include monoalcohols, monoamines, mono hydrazides and monothiols.

Examples of preferred end-capping agents for isocyanate groups include butylamine, ethylamine, propylamine, hexylamine. Most preferred end-capping agents for isocyanate groups is butylamine. We have found that the choice of the best end-capping agents can further improve one or more of the properties including: the polyurethane dispersants solubility, dispersant processing, ease of comminution, dispersion particle size and final print optical density.

Preferably, the end-capping agent reacts with from 1 to 70, more preferably from 5 to 50 and especially from 10 to 40% of the isocyanate groups present in the polyurethane prepolymer on a molar basis.

### Preferred polyurethane dispersants compositions

Taking account of the above preferences, a preferred polyurethane dispersant is obtained by the reaction of a mixture comprising the components:
i) at least one diisocyanate selected from ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate; and
ii) at least one diol selected from trimethylene glycol, ethyleneglycol, propylene glycol, 1,4-butane diol, 1,5-pentanediol, 1,6-hexanediol, neopentyl glycol, diethylene glycol, dipropylene glycol, 1,4-butanediol, 1,2-propylene glycol, 1,4-cyclohexanediamethylol, 1,4-cyclohexanediol, 1,4-bis(2-hydroxyethoxy) benzene, bis(2-hydroxyethyl)terephthalante, paraxylylenediol, glycerol monoester, cyclohexanedimethanol, ethyleneoxide and propylene oxide extended hydrogenated bisphenol A, polyetherdiol, polylesterdiol, polycarbonate diol and dihydroxy alkanoic acids (e.g. 2,2-dimethylol propionic acid).

Preferably, the isocyanate and hydroxy groups are in the proportions previously described which are suited to subsequent chain extension.

Preferably, the chain extension is performed as previously mentioned especially with hydrazine and/or a diamine as the chain extending agent.

The preferred dispersant may also be prepared using end-capping agents.

It is possible to both end-cap and chain extend the preferred polyurethane dispersants. Preferably, this is done simultaneously.

Thus, a more preferred polyurethane dispersant is obtained by the reaction of the components:
i) at least one diisocyanate selected from ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate;
iia) at least one diol selected from trimethylene glycol, ethyleneglycol, propylene glycol, 1,4-butane diol, 1,5-pentanediol, 1,6-hexanediol, neopentyl glycol, diethylene glycol, dipropylene glycol, 1,4-butanediol, 1,2-propylene glycol, 1,4-cyclohexanediamethylol, 1,4-cyclohexanediol, 1,4-bis(2-hydroxyethoxy) benzene, bis(2-hydroxyethyl)terephthalante, paraxylylenediol, glycerol monoester, cyclohexanedimethanol, ethyleneoxide and propylene oxide extended hydrogenated bisphenol A, polyetherdiol, polylesterdiol and polycarbonate diol; and
iib) at least one dihydroxy alkanoic acid (preferably 2,2-dimethylol propionic acid);
iii) optionally a chain extending agent (preferably hydrazine and/or a diamine); and
iv) optionally an end-capping agent.

Preferably, components i), iia) and iib) are reacted in a first stage to form a prepolymer. Then components iii) and/or iv) may be reacted with the prepolymer. Components iii) and iv) may be reacted separately or simultaneously. Component iv) may be reacted before, during or after component iii).

Preferably, the polyurethane dispersant comprises repeat units from dihydroxy alkanoic acid (especially 2,2-dimethylol propionic acid) and isophorone diisocyanate.

In any of the above polyurethane dispersants additional isocyanate reactive compounds other than diols and chain extenders may be used. For example amine, imine and thiol compounds may be optionally present in the reaction mixture. Thus, polyurethane may additionally comprise for example urea and thiourea groups. In addition known side reaction groups may also be present such as biuret and allophanate groups. Thus, by the term polyurethane we do not mean that the only group present as the linkage groups is the urethane group, instead we mean that this is the predominant group present.

### Amounts of polyurethane dispersant

The comminution composition in step i) of the first aspect of the present invention preferably comprises 7 to 35, more preferably 10 to 30, especially 15 to 25 and most especially about 20 parts (+/- 1 part) of polyurethane dispersant per 100 parts of solid by weight. We have found that when the solid is or comprises a pigment, these relative proportions surprising provide improved optical density on plain paper, good print fastness properties and good colloidal dispersion stability.

### Liquid medium

The liquid medium preferably is or comprises water. In addition to water the liquid medium may comprise one or more organic liquids which are preferably water-miscible organic liquids.

Preferably, the liquid medium comprises water and at least one water-miscible organic liquid in a weight ratio of 50:50 to 99:1, more preferably 50:50 to 95:5, especially from 60:40 to 95:5 and most especially 60:40 to 90:10.

Preferred water-miscible organic liquids present in the liquid medium during the comminution step include alcohols (especially glycols), ketones, ethers, amides (especially cyclic amides) and sulfolane.

Such water-miscible organic liquids can aid in better dissolving/dispersing the polyurethane dispersant and in the wetting and comminution of the solid.

In some instances it can be desirable that during the comminution step the liquid medium comprises water and less than 10% by weight, more preferably less than 5% by weight, especially less than 1% by weight of one or more water-miscible organic liquids based on the total liquid medium. Such allows a better selection of additives for the final ink and ink jet printing ink without needing to purify the composition to remove unwanted water-miscible organic liquids. In this instance it is often advantageous to remove any water-miscible organic liquids present in the polyurethane dispersant composition (e.g. n-methyl pyrrolidone) prior to preparing the composition for comminution. Preferably, this is done by a purification step between the preparation of the polyurethane and the formation of the composition for comminution. Preferred purification steps to remove water-miscible organic liquids from the polyurethane dispersant include distillation and membrane washing.

### Optional additives for the composition to be comminuted

The composition for comminution may comprise a wide range of optional additives in addition to the solid, the liquid medium and the polyurethane dispersant. Suitable optional additives include surfactants, pH buffers, bases, biocides, fungicides and viscosity modifiers.

### Comminuting

The word comminuting is understood to include those processes which impart sufficient energy to the composition in step i) so as to reduce the average particle size of the solid. Milling is the most common process of this kind although other processes for comminution include microfluidizing, sonication and homogenisation. Of these milling and especially bead milling are preferred methods of comminution.

Low energy processes such as stirring, blending, mixing, tumbling and folding are not regarded as methods of comminution since the solid particle size remains essentially unchanged.

As previously mentioned prior to comminution the solid preferably has an average particle size of greater than or equal to 1 micron. Typically prior to comminution the solid has an average particle size of from 1 to 100 microns. The comminution is preferably such that the solid after comminution has an average particle size of less than 1 micron, preferably from 30 to 500nm, especially from 30 to 200nm and most especially from 50 to 170nm. The average particle size may be the Z or volume average size. Any suitable method for measuring the particle size may be used but the preferred method is light scattering.

Preferred encapsulated solid particles are encapsulated by a polyurethane dispersant and essentially no other kind of polymeric dispersant.

By the word essentially it is preferred that in step i) of the first aspect of the present invention the composition comprises less than 1 part, more preferably less than 0.1 parts and especially 0 parts of polymeric dispersant other than a polyurethane per 10 parts of polyurethane dispersant, wherein all parts are by weight.

Dispersants other than polyurethanes which are preferably absent in the composition in step i) include polyacrylic, polystyrenic and polyester dispersants.

It is preferred that no dispersants other than polyurethanes are added to the comminuted solid between steps i) and ii). Thus, the only dispersant which is cross-linked around the solid is essentially a polyurethane.

Preferably the final encapsulated solid comprises less than 1 part, more preferably less than 0.1 part and especially 0 parts of cross-linked polymeric dispersant other than a polyurethane per 10 parts of cross-linked polyurethane dispersant, wherein all parts are by weight.

Preferably, the final encapsulated solid comprises no polymeric dispersant other than a polyurethane (whether or not cross-linked).

### Cross-linking

After the comminution step the polyurethane dispersant is cross-linked in the presence of the solid and a liquid medium so as to encapsulate the solid particles. The liquid medium may be the same as that used on the comminution step or it may be different. Preferably, the liquid medium is as hereinbefore described.

Many methods are suitable for effecting cross-linking of the polyurethane. For example it is possible to include groups in the polyurethane which may crosslink on heating, the addition of catalyst or by deblocking reactive groups. This is "self" cross-linking as no external cross-linking agent is needed.

Alternatively cross-linking can be effected by means of adding a cross-linking agent.

In one case isocyanate functional polyurethane dispersants are subsequently cross-linked by a cross-linking agent containing two or more isocyanate reactive groups. Alcohols, thiols, amines, hydrazine and hydrazides being especially suitable.

Equally in another case a hydroxy functional polyurethane dispersant is cross-linked by a cross-linking agent containing two or more isocyanate, aziridine, epoxy, silane, carbodiimide, melamine or oxazoline groups.

In a preferred cross-linking method the polyurethane dispersant contains carboxylic acid groups which are cross-linked with one or more cross-linking agents selected from carbodiimides, aziridines, oxazolines and especially epoxy groups. In this embodiment the cross-linking reaction and the cross-linking agents may be as disclosed in PCT publication WO 2006/064193 and WO 2008/107658.

Especially preferred cross-linking agents include polyglycerol polyglycidyl ether and/or trimethylolpropane polyglycidyl ether. An example of a suitable polygylcerol polyglycidyl ether is commercially available as Dencaol^{RTM} EX-521 from Nagase ChemteX. Polyalkyleneoxy polyglycidyl ethers may also be used.

Cross-linking is most preferably effected by means of heating.
The temperature for cross-linking is preferably from 50 to 120°C, more preferable from 50 to 100°C. The time for the cross-linking reaction is preferably from 10 minutes to 16 hours, especially from 1 to 10 hours and more especially from 3 to 8 hours.

### Drying of the dispersion

If desired the process according to the first aspect of the present invention may be used to prepare the encapsulated particulate solid in a concentrated or dry form. Some or all of the liquid medium may be removed in a further step.

Thus, the process according to the first aspect of the present invention may additionally comprise the step of removing some of the liquid medium so as to prepare a concentrated dispersion, paste or wet-cake.

Equally, the process according to the first aspect of the present invention may further comprise the step of removing all the liquid medium thereby providing a dry encapsulated particulate solid. This solid may be subsequently redispersed in a liquid medium for an end-use application. The advantage of this is that it makes it possible to transport the particulate solid without the un-necessary weight of the liquid medium.

### Second aspect

According to a second aspect of the present invention there is provided a dispersion obtainable or obtained by the process of the first aspect of the present invention. Preferably, the solid is or comprises a pigment as previously mentioned.

### Prepaying an ink

After the cross-linking step ii) the dispersion may be purified in order to remove for example any uncross-linked or free dispersant. Suitable methods for purification include filtration, centrifugation and especially membrane purification. The methods described in PCT publication WO 2008/043984 are especially suitable for purification of these dispersions. Preferably, cross-flow membrane purification is used.

After the cross-linking step ii) the dispersion may be filtered or centrifuged so as to remove any oversized particles. Preferably, after step ii) the dispersion is filtered and/or centrifuged so as to removed any solid particles having a size of 1 micron of greater.

Especially where the ink is to be used as an ink jet printing ink the dispersion is treated so as to remove any di or higher valent metal ions. Preferably, the final dispersion contains less than 1,000ppm, more preferably less than 500ppm and especially less than 100ppm of di and higher valent metal ions. The term ppm as used herein means parts per million by weight based on all the components of the liquid medium.

Especially when the solid is or comprises a pigment, the encapsulated pigment dispersion is preferably used to prepare an ink, especially an ink jet printing ink. This is preferably done by means of a process according to the first aspect of the present invention which further comprises the step of preparing an ink by adding one or more ink additives selected from viscosity modifiers, pH buffers, corrosion inhibitors, biocides, dyes, further pigments, kogation reducing additives, chelating agents, binders and water miscible organic liquids. Such additives being useful in formulating optimal ink jet printing inks.

Preferred water miscible organic liquids are any of those suitable for use in inks, especially in ink jet printing inks. Examples of such water miscible organic liquids are well described in the art, for example in WO 2006/103414 at page 10, line 17 to page 11, line 23. For reference the term organic liquids as used herein is meant to cover the same liquids as those mentioned as organic solvents in WO 2006/103414.

Preferred inks (especially ink jet printing inks) contain water and at least one water miscible organic liquids as the liquid medium. Preferably, the amount of water and total water miscible organic liquid is in a weight ratio of 50:50 to 99:1, more preferably 50:50 to 95:5, especially from 60:40 to 95:5 and most especially 60:40 to 90:10.

Preferably for ink jet printing inks, the ink has a viscosity of less than 50mPa.s, more preferably less than 30mPa.s and especially from 1 to 20mPa.s. The viscosity is preferably measured by a rheometer at a temperature of 25°C. Preferably, the viscosity is Newtonian in its behaviour.

Preferred inks comprise:
i) from 0.01 to 50 parts, more preferably from 0.1 to 30 parts and especially from 1 to 15 parts by weight of encapsulated pigment particles prepared by the process according to the first aspect of the present invention; and
ii) 50 to 99.99 parts, more preferably from 70 to 99.9 parts and especially from 85 to 99 parts by weight of a liquid medium;
wherein the parts are by weight and the sum of the parts of components i) and ii) is 100 parts.

Preferably, the ink is suitable for use in an ink jet printer, especially an acoustic, thermal or piezo ink jet printer.

### Other aspects

According to a third aspect of the present invention there is provided an ink jet printer ink comprising a dispersion according to the second aspect of the present invention.

According to a fourth aspect of the present invention there is provided an ink jet printer cartridge comprising a chamber and an ink according to the third aspect of the present invention, wherein the ink is in the chamber.

According to a fifth aspect of the present invention there is provided an ink jet printer comprising an ink jet printer cartridge according to the fourth aspect of the present invention.

According to a sixth aspect of the present invention there is provided a substrate onto which is printed an ink according to the third aspect of the present invention. The substrate may be paper, plastic, glass, metal or a fabric. The paper may or may not have an ink jet receptor coating. The paper may have a receptor coating of the swellable or porous kind. The paper may be acidic, basic or neutral in nature.

The present invention will be further illustrated by the following examples in which all parts are by weight unless indicated otherwise.

### Examples

### 1. Dispersant Preparation

### 1.1 Preparation of Dispersant (1)

### 1.1.1 Preparation of Prepolymer solution (1)

N-methylpyrrolidone (200 parts), 2,2-dimethylolpropionic acid (57.37 parts) and isophorone diisocyanate (142.63 parts) were charged to a reactor vessel at a temperature of 25°C.

The reactor contents were stirred and heated to 50°C and 2 drops of tin octoate were added. The reactor contents were then heated to and maintained at 95°C for 2.5 hours. The reactor contents were sampled and the isocyanate content determined by titration. The isocyanate content was found to be 4.2%w/w. Further N-methyl pyrrolidone (262.9 parts) was added to the reactor which was then cooled to 25°C.

This was designated as Prepolymer solution (1).

### 1.1.2 Chain Extension and the Preparation of Dispersant solution (1)

N-methyl pyrrolidone (640 parts) and hydrazine (11.05 parts) were added to a second reactor. The second reactor contents were stirred at 25°C. Prepolymer solution (1) formed in step 1.1.1 (640 parts) was added at 70°C over 10 minutes. The temperature of the second reactor contents (1) was allowed to rise during the addition of Prepolymer solution (1). When addition was complete stirring was continued for a further 1 hour and the reactor contents were allowed to cool to 25°C.

This was designated as Dispersant solution (1).

### 1.1.3 Removal of N-methyl pyrrolidone from Dispersant Solution (1) by Dialysis

A portion of Dispersant solution (1) prepared in step 1.1.2 was taken and dialysed to remove N-methyl pyrrolidone and the dialysed material was dried in an oven at 70°C.

This was designated as Dispersant (1).

Dispersant (1) had a number average molecular weight of 22,518 and a weight average molecular weight of 42,178.

The calculated acid value of the dispersant was 2.0mmol/g.

### 1.2 Preparation of Dispersant (2)

### 1.2.1 Preparation of Prepolymer solution (2)

N-methylpyrrolidone (107.69 parts), 2,2-dimethylolpropionic acid (40.2 parts), ethylene glycol (9.39 parts) and isophorone diisocyanate (150.41 parts) were charged to a reactor vessel at a temperature of 25°C.

The reactor contents were stirred and heated to 50°C and 2 drops of tin octoate were added. The reactor contents were then heated to and maintained at 95°C for 1.5 hours. The reactor contents were sampled and the isocyanate content determined by titration. The isocyanate content was found to be 6.0%w/w. Further N-methyl pyrrolidone (354.9 parts) was added to the reactor which was then cooled to 25°C.

This was designated as Prepolymer solution (2).

### 1.2.2 Chain Extension and the Preparation of Dispersant solution (2)

N-methyl pyrrolidone (320 parts) and hydrazine (6.07 parts) were added to a second reactor. The second reactor contents were stirred at 25°C. Prepolymer solution (2) formed in step 1.2.1 (320 parts) was added at 70°C over 10 minutes. The temperature of the second reactor was allowed to rise during addition of prepolymer solution (2). When addition was complete stirring was continued for 1 hour and the reactor was allowed to cool to 25°C.

This was designated as Dispersant solution (2).

### 1.2.3 Removal of N-methyl pyrrolidone from Dispersant Solution (2) by Dialysis

A portion of Dispersant solution (2) as prepared in step 1.2.2 was taken and dialysed to remove N-methyl pyrrolidone and the dialysed material was dried in an oven at 70°C.

This was designated as Dispersant (2).

Dispersant (2) had a number average molecular weight of 22,104 and a weight average molecular weight of 40,366.

The calculated acid value of the dispersant was 1.41 mmol/g.

### 1.3 Preparation of Dispersant (3)

### 1.3.1 Preparation of Prepolymer solution (3)

N-methylpyrrolidone (107.69 parts), 2,2-dimethylolpropionic acid (33.50 parts), ethylene glycol (13.06 parts) and isophorone diisocyanate (153.44 parts) were charged to a reactor vessel at a temperature of 25°C.

The reactor contents were stirred and heated to 50°C and 2 drops of tin octoate were added. The reactor contents were then heated to and maintained at 95°C for 1.5 hours. The reactor contents were sampled and the isocyanate content determined by titration. The isocyanate content was found to be 6.1%w/w. Further N-methyl pyrrolidone (353.96 parts) was added to the reactor which was then cooled to 25°C.

This was designated as Prepolymer solution (3).

### 1.3.2 Chain Extension and the Preparation of Dispersant solution (3)

N-methylpyrrolidone (320 parts) and hydrazine (6.182 parts) were added to a second reactor. The second reactor contents were stirred at 25°C and Prepolymer solution (3) formed in step 1.3.1 above (320 parts) was added at 70°C over 10 minutes. The temperature of the second reactor was allowed to rise during addition of prepolymer solution (3). When addition was complete stirring was continued for 1 hour and the reaction allowed to cool to 25°C.

This was designated as Dispersant solution (3).

### 1.3.3 Removal of N-methyl pyrrolidone from Dispersant Solution (3) by Dialysis

A portion of Dispersant solution (3) prepared in step 1.3.2 was taken and dialysed to remove N-methylpyrrolidone, and the dialysed material was dried in an oven at 70°C.

This was designated as Dispersant (3).

Dispersant (3) had a number average molecular weight of 22,674 and a weight average molecular weight of 41,524.

The calculated acid value of the dispersant was 1.17mmol/g.

### 1.4 Preparation of Dispersant (4) and Dispersant Aqueous Solution (4)

### 1.4.1 Preparation of Dispersant (4)

Dimethylol propionic acid (53.54 parts), ethylene glycol (13.5 parts), sulfolane (300 parts) and tin octoate (0.02 parts) were charged to a reactor at 25°C. The reactor was heated to 100°C and isophorone diisocyanate (132.96 parts) was added to the reactor over ca 1.5 hours. The reactor was maintained at ca 100°C for a further 15 hours to produce a solution of Dispersant (4) in sulfolane.

### 1.4.2 Preparation of Dispersant Aqueous Solution (4)

The solution of Dispersant (4) prepared in 1.4.1, was stirred at 80°C and to this was added a feed comprising de-ionised water (292.46 parts) and potassium hydroxide aqueous solution 45%w/w (37.71 parts). The pH of the resulting solution was adjusted to a value of 9 using potassium hydroxide aqueous solution 10%w/w.

This was designated as Dispersant Aqueous Solution (4). The aqueous solution contained approximately 23.8% by weight of Dispersant (4).

Dispersant (4) had a number average molecular weight of 20206 and a weight average molecular weight of 49058.

The calculated acid value of Dispersant (4) was 2.0mmol/g.

### 1.5 Preparation of Dispersant (5) and Dispersant Aqueous Solution (5) (not according to the invention)

### 1.5.1 Preparation of Prepolymer Solution (5)

Dimethylol propionic acid (32.99 parts), sulfolane (172.5 parts) and isophorone diisocyanate (82.01 parts) were charged to a reactor at 25°C. The reactor was stirred and tin octoate (0.0107 parts) was added to the reactor.

The reactor was heated to and maintained at ca 95°C for 1.5 hours at which point heating was removed and the reactor contents sampled in order to determine the isocyanate content by titration. The isocyanate content was found to be 3.4%w/w.

This was designated Prepolymer Solution (5).

### 1.5.2 Chain extension and preparation of Dispersant Aqueous Solution (5)

De-ionised water (217.66 parts), potassium hydroxide aqueous solution 10%w/w (100.61 parts) and hydrazine (2.653 parts) were added to a second reactor. The second reactor contents were stirred at 40°C and Prepolymer solution (5) (262 parts) was added over 30 minutes. The temperature of Prepolymer Solution (5) was maintained at about 70°C. The temperature of the second reactor was maintained at ca 40°C throughout addition of Prepolymer solution (5). When addition was complete stirring was continued for 2 hours during which time the reaction was allowed to cool to 25°C.

This was designated as Dispersant Aqueous Solution (5). The aqueous solution contained approximately 20% by weight of Dispersant (5).

Dispersant (5) had a number average molecular weight of 17055 and a weight average molecular weight of 46853.

The calculated acid value of Dispersant (5) was 2.10mmol/g.

### 1.6 Preparation of Dispersant (6) and Dispersant Aqueous Solution (6) (not according to the invention)

### 1.6.1 Preparation of Prepolymer Solution (6)

Dimethylol propionic acid (30.94 parts), ethylene glycol (19.17 parts), sulfolane (345 parts) and isophorone diisocyanate (179.89 parts) were charged to a reactor at 25°C. The reactor was stirred and tin octoate (0.0233 parts) was added to the reactor.

The reactor was heated to and maintained at ca 95°C for 2 hours at which point heating was removed and the reactor contents sampled in order to determine the isocyanate content by titration. The isocyanate content was found to be 3.8%w/w.

This was designated as Prepolymer Solution (6).

### 1.6.2 Chain extension and preparation of Dispersant Aqueous Solution (6)

De-ionised water (251.2 parts), potassium hydroxide aqueous solution 10%w/w (5.97 parts) and hydrazine monohydrate (7.203 parts) were added to a second reactor. The second reactor contents were stirred at 40°C and Prepolymer Solution (6) (265.2 parts) and a separate feed of potassium hydroxide aqueous solution 10%w/w (53.71 parts) were added over 30 minutes. The temperature of Prepolymer Solution (6) was maintained at about 70°C. The temperature of the second reactor was maintained at ca 40°C throughout addition of Prepolymer solution (6). When addition was complete stirring was continued for 1 hour during which time the reaction was allowed to cool.

This was designated as Dispersant Aqueous Solution (6). The aqueous solution contained approximately 20% by weight of Dispersant (6).

Dispersant (6) had a number average molecular weight of 17348 and a weight average molecular weight of 66224.

The calculated acid value of Dispersant (6) was 0.96mmol/g.

### 1.7 Preparation of Dispersant (7) and Dispersant Aqueous Solution (7) (not according to the invention)

### 1.7.1 Preparation of Prepolymer Solution (7)

Dimethylol propionic acid (26.9 parts), ethylene glycol (16.67 parts), sulfolane (300 parts) and isophorone diisocyanate (156.43 parts) were charged to a reactor at 25°C. The reactor was stirred and tin octoate (0.0233 parts) was added to the reactor.

The reactor was heated to and maintained at ca 95°C for 1.5 hours at which point heating was removed and the reactor contents sampled in order to determine the isocyanate content by titration. The isocyanate content was found to be 3.9%w/w.

This was designated as Prepolymer Solution (7).

### 1.7.2 Chain extension and preparation of Dispersant Aqueous Solution (7)

De-ionised water (210.7 parts), potassium hydroxide aqueous solution 10%w/w (4.98 parts) and hydrazine monohydrate (6.43 parts) were added to a second reactor. The second reactor contents were stirred at 40°C and Prepolymer Solution (7) (221.5 parts) and a separate feed of potassium hydroxide aqueous solution 10%w/w (44.86 parts) were added over 30 minutes. The temperature of Prepolymer Solution (7) was maintained at about 70°C. The temperature of the second reactor was maintained at ca 40°C throughout addition of Prepolymer solution (7). When addition was complete stirring was continued for 1 hour during which time the reaction was allowed to cool.

This was designated as Dispersant Aqueous Solution (7). The aqueous solution contained approximately 20% by weight of Dispersant (7).

Dispersant (7) had a number average molecular weight of 14780 and a weight average molecular weight of 35864.

The calculated acid value of Dispersant (7) was 0.96mmol/g.

### 1.8 Preparation of Dispersant (8) and Dispersant Aqueous Solution (8) (not according to the invention)

### 1.8.1 Preparation of Prepolymer Solution (8)

Dimethylol propionic acid (30.94 parts), ethylene glycol (19.17 parts), sulfolane (345 parts) and isophorone diisocyanate (179.89 parts) were charged to a reactor at 25°C. The reactor was stirred and tin octoate (0.0234 parts) was added to the reactor.

The reactor was heated to and maintained at ca 95°C for 2 hours at which point heating was removed and the reactor contents sampled in order to determine the isocyanate content by titration. The isocyanate content was found to be 3.8%w/w.

This was designated Prepolymer Solution (8).

### 1.8.2 Chain extension and preparation of Dispersant Aqueous Solution (8)

De-ionised water (177.6 parts), sulfolane (85.71 parts), potassium hydroxide aqueous solution 10%w/w (4.92 parts) and ethylenediamine (7.7 parts) were added to a second reactor. The second reactor contents were stirred at 40°C and Prepolymer Solution (8) (257.1 parts) and a separate feed of potassium hydroxide aqueous solution 10%w/w (44.27 parts) were added over 30 minutes. The temperature of Prepolymer Solution (8) was maintained at about 70°C. The temperature of the second reactor was maintained at ca 40°C throughout addition of Prepolymer solution (8). When addition was complete stirring was continued for 1 hour during which time the reaction was allowed to cool.

This was designated as Dispersant Aqueous Solution (8). The aqueous solution contained approximately 20% by weight of Dispersant (8).

Dispersant (8) had a number average molecular weight of 11893 and a weight average molecular weight of 43508.

The calculated acid value of Dispersant (8) was 0.93mmol/g.

### 1.9 Preparation of Dispersant (9) and Dispersant Aqueous Solution (9) (not according to the invention)

### 1.9.1 Preparation of Prepolymer Solution (9)

Dimethylol propionic acid (50.44 parts), ethylene glycol (31.26 parts), sulfolane (563 parts) and isophorone diisocyanate (293.3 parts) were charged to a reactor at 25°C. The reactor was stirred and tin octoate (0.0493 parts) was added to the reactor.

The reactor was heated to and maintained at ca 95°C for 2 hours at which point heating was removed and the reactor contents sampled in order to determine the isocyanate content by titration. The isocyanate content was found to be 3.9%w/w.

This was designated as Prepolymer Solution (9).

### 1.9.2 Chain extension and preparation of Dispersant Aqueous Solution (9)

De-ionised water (226 parts), potassium hydroxide aqueous solution 10%w/w (5 parts), butylamine (2.152 parts) and ethylenediamine (5 parts) were added to a second reactor. The second reactor contents were stirred at 40°C and Prepolymer Solution (9) (222 parts) and a separate feed of potassium hydroxide aqueous solution 10%w/w (45 parts) were added over 30 minutes. The temperature of Prepolymer Solution (9) was maintained at about 70°C. The temperature of the second reactor was maintained at ca 40°C throughout addition of Prepolymer solution (8). When addition was complete stirring was continued for 1 hour during which time the reaction was allowed to cool. This was designated as Dispersant Aqueous Solution (9). The aqueous solution contained approximately 20% by weight of Dispersant (9).

Dispersant (9) had a number average molecular weight of 19134 and a weight average molecular weight of 52740.

The calculated acid value of Dispersant (9) was 0.93mmol/g.

### 1.10 Preparation of Dispersant (10) and Dispersant Aqueous Solution (10) (not according to the invention)

### 1.10.1 Preparation of Prepolymer Solution (10)

Dimethylol propionic acid (40.35 parts), ethylene glycol (25 parts), sulfolane (450 parts) and isophorone diisocyanate (234.6 parts) were charged to a reactor at 25°C. The reactor was stirred and tin octoate (0.0427 parts) was added to the reactor.

The reactor was heated to and maintained at ca 95°C for 2 hours at which point heating was removed and the reactor contents sampled in order to determine the isocyanate content by titration. The isocyanate content was found to be 3.7%w/w.

This was designated as Prepolymer Solution (10).

### 1.10.2 Chain extension and preparation of Dispersant Aqueous Solution 10

De-ionised water (234 parts), potassium hydroxide aqueous solution 10%w/w (5.24 parts), ethanolamine (1.88 parts) and ethylenediamine (5.243 parts) were added to a second reactor. The second reactor contents were stirred at 40°C and Prepolymer Solution (10) (233 parts) and a separate feed of potassium hydroxide aqueous solution 10%w/w (47.12 parts) were added over 30 minutes. The temperature of the second reactor was maintained at ca 40°C throughout addition of Prepolymer solution (10). When addition was complete stirring was continued for 1 hour during which time the reaction was allowed to cool.

This was designated as Dispersant Aqueous Solution (10). The aqueous solution contained approximately 20% by weight of Dispersant (10).

Dispersant (10) had a number average molecular weight of 20774 and a weight average molecular weight of 53172.

The calculated acid value of Dispersant (10) was 0.93mmol/g.

### 1.11 Preparation of Dispersant (11) and Dispersant Aqueous Solution (11)

### 1.11.1 Preparation of Prepolymer Solution (11)

Dimethylol propionic acid (62.81 parts), ethylene glycol (24.5 parts), sulfolane (563 parts) and isophorone diisocyanate (287.7 parts) were charged to a reactor at 25°C. The reactor was stirred and tin octoate (0.04 parts) was added to the reactor.

The reactor was heated to and maintained at ca 95°C for 2 hours at which point heating was removed and the reactor contents sampled in order to determine the isocyanate content by titration. The isocyanate content was found to be 3.8%w/w.

This was designated as Prepolymer Solution (11).

### 1.11.2 Chain extension and preparation of Dispersant Aqueous Solution (11)

De-ionised water (228 parts), potassium hydroxide aqueous solution 10%w/w (6.47 parts), butylamine (2.233 parts) and ethylenediamine (5.19 parts) were added to a second reactor. The second reactor contents were stirred at 40°C and Prepolymer Solution (11) (230.8 parts) and a separate feed of potassium hydroxide aqueous solution 10%w/w (58.22 parts) were added over 30 minutes. The temperature of the second reactor was maintained at ca 40°C throughout addition of Prepolymer solution (11). When addition was complete stirring was continued for 1 hour during which time the reaction was allowed to cool.

This was designated as Dispersant Aqueous Solution (11). The aqueous solution contained approximately 20% by weight of Dispersant (11).

Dispersant (11) had a number average molecular weight of 19328 and a weight average molecular weight of 64203.

The calculated acid value of Dispersant (11) was 1.16mmol/g.

### 1.12 Preparation of Dispersant (12) and Dispersant Aqueous Solution (12)

### 1.12.1 Preparation of Prepolymer Solution (12)

Dimethylol propionic acid (70.46 parts), sulfolane (524 parts), ethylene glycol (16.5 parts) and isophorone diisocyanate (236.2 parts) were charged to a reactor at 25°C. The reactor was stirred and tin octoate (2 drops) was added to the reactor.

The reactor was heated to and maintained at ca 95°C for 3 hours at which point heating was removed and the reactor contents sampled in order to determine the isocyanate content by titration. The isocyanate content was found to be 3.3%w/w.

This was designated as Prepolymer Solution (12).

### 1.12.2 Chain extension and preparation of Dispersant Aqueous Solution (12)

De-ionised water (254 parts), potassium hydroxide aqueous solution 10%w/w (9 parts) and ethylenediamine (5.04 parts) were added to a second reactor. The second reactor contents were stirred at 40°C and Prepolymer Solution (12) (267 parts) and a separate feed of potassium hydroxide aqueous solution 10%w/w (80.8 parts) were added over 30 minutes. The temperature of the second reactor was maintained at ca 40°C throughout addition of Prepolymer solution (12). When addition was complete stirring was continued for 1 hour during which time the reaction was allowed to cool.

This was designated as Dispersant Aqueous Solution (12). The aqueous solution contained approximately 20% by weight of Dispersant (12).

Dispersant (12) had a number average molecular weight of 18037 and a weight average molecular weight of 52585.

The calculated acid value of Dispersant (12) was 1.55mmol/g.

### 1.13 Preparation of Comparative Dispersant Solution (1)

A monomer feed composition was prepared by mixing benzyl methacrylate (785 parts), methacrylic acid (215 parts), butyl 3-mercatopropionate (5.97 parts) and dipropylene glycol (375 parts).

An initiator feed composition was prepared by mixing tert-butyl peroxy-2-ethylhexanoate (17.60 parts) and dipropylene glycol (187.5 parts).

Dipropylene glycol (187.5 parts) was heated to 80°C in a reactor vessel, continuously stirred and purged with a nitrogen gas atmosphere. The monomer feed and the initiator feed compositions were slowly fed into the reactor vessel whilst stirring the contents, maintaining the temperature at 80°C and maintaining the nitrogen atmosphere. The monomer feed and the initiator feed were both fed into the reactor over 4 hours. The reactor vessel contents were maintained at 80°C for a further 6 hours before cooling to 25°C. The final solids content was 40%. This was designated as Comparative Dispersant Solution (1).

Comparative Dispersant (1) was an acrylic copolymer which had a number average molecular weight of 51,154, a weight average molecular weight of 86,797 and a polydispersity of 1.7 as measured by GPC. Comparative Dispersant (1) had an acid value corresponding to 2.5 mmoles of acid groups/g of dispersant. Comparative Dispersant (1) contained the repeat units from benzyl methacrylate and methacrylic acid in the proportions 78.5:21.5 by weight respectively.

### 1.14 Preparation of Comparative Dispersant (2)

### 1.14.1 Preparation of Comparative Prepolymer Solution (2)

Dimethylol propionic acid (51.6 parts), polycaprolactone 1250 diol (208.4 parts), methyl ethyl ketone (360 parts) and isophorone diisocyanate (140 parts) were charged to a reactor at 25°C. The reactor was stirred and tin octoate (2 drops) was added to the reactor.

The reactor was heated to and maintained at 81-83°C for 7.5 hours. The reactor contents were sampled and the isocyanate content determined by titration. The isocyanate content was found to be 0.82%w/w.

This was designated as Comparative Prepolymer Solution (2). This comparative example is based on JP09-104834, [0120], synthesis example 7.

### 1.14.2 Chain extension and preparation of Comparative Dispersant Aqueous Solution (2)

Comparative Prepolymer Solution (2) was diluted with methyl ethyl ketone (450 parts). A solution consisting of methyl ethyl ketone (53.14 parts) and ethylenediamine (2.648 parts) was prepared. The reactor contents were stirred at room temperature and the ethylenediamine solution was added quickly. When addition was complete stirring was continued for 1 hour. A portion of this solution (480 parts) was taken and the solvent removed by rotary evaporation. De-ionised water (141.78 parts), potassium hydroxide aqueous solution 45%w/w (10.19 parts) and sulfolane (247.6g) were added to the flask, which was heated at 80°C until a homogeneous solution was obtained.

This was designated as Comparative Dispersant Aqueous Solution (2). The aqueous solution contained approximately 20% by weight of Comparative Dispersant (2).

Comparative Dispersant (2) had a number average molecular weight of 28046 and a weight average molecular weight of 67146.

The calculated acid value of Comparative Dispersant (2) was 0.96mmol/g.

### 2. Preparation of Dispersant Aqueous Solutions

### 2.1 Dispersant Aqueous Solution (1)

Dispersant (1) as prepared in 1.1.3 (100 parts), potassium hydroxide solution (45%w/w) (20.6 parts) and de-ionised water (607.8 parts) were heated in a reactor at 70°C for 1 hour. Potassium hydroxide solution (45%w/w) was added drop wise until a pH of about 9 was reached.

This was designated as Dispersant Aqueous Solution (1). The aqueous solution contained approximately 15% by weight of Dispersant (1).

### 2.2 Dispersant Aqueous Solution (2)

Dispersant (2) as prepared in 1.2.3 (100 parts), potassium hydroxide solution (45%w/w) (14.4 parts) and de-ionised water (595.4 parts) were heated in a reactor at 70°C for 1 hour. Potassium hydroxide solution (45%w/w) was added drop wise until a pH of about 9 was reached.

This was designated as Dispersant Aqueous Solution (2). The aqueous solution contained approximately 15% by weight of Dispersant (2).

### 2.3 Dispersant Aqueous Solution (3)

Dispersant (3) as prepared in 1.3.3 (100 parts), potassium hydroxide solution (45%w/w) (12 parts) and de-ionised water (590.6 parts) were heated in a reactor at 70°C for 1 hour. Potassium hydroxide solution (45%w/w) was added drop wise until a pH of about 9 was reached.

This was designated as Dispersant Aqueous Solution (3). The aqueous solution contained approximately 15% by weight of Dispersant (3).

### 2.4 Comparative Dispersant Aqueous Solution (1)

Comparative Dispersant Solution (1) as prepared in 1.13 (100 parts) was neutralised with potassium hydroxide aqueous solution to give an aqueous solution having a pH of about 9. This resulted in Comparative Dispersant Aqueous Solution (1) which contained approximately 29% by weight of Comparative Dispersant (1)

### 3. Preparation of Mill-bases by comminution

### 3.1 Black Mill-base (1)

Pigment powder (75 parts of NIPex^{RTM} 170IQ Carbon Black pigment, ex Evonik Degussa), Dispersant Aqueous Solution (1) as prepared in 2.1 (100 parts) and water (325 parts) were mixed together to form a premixture.

The premixture was thoroughly mixed together using a Silverson^{RTM} mixer for 1 hour. After mixing the mixture was transferred to a horizontal bead mill containing 0.2mm beads. The mixture was then comminuted (milled) for 7 hours.

The milling beads were then separated from the milled mixture. This resulted in Black Mill-base (1). The pigment particles in the resulting mill-base had a Z-Average particle size of 93nm. The Z-Average particle size was established for all dispersions using a Zetasizer^{RTM} 3000 obtained from Malvern.

### 3.2 Black Mill-base (2)

Black Mill-base (2) was prepared in the same way as Black mill-base (1) except that Dispersant Aqueous Solution (2) prepared in 2.2 was used in place of Dispersant Aqueous Solution (1). The pigment particles in the resulting mill-base had a Z-Average particle size of 99nm.

### 3.3 Black Mill-base (3)

Black Mill-base (3) was prepared in the same way as Black mill-base (1) except that Dispersant Aqueous Solution (3) prepared in 2.3 was used in place of Dispersant Aqueous Solution (1), and the milling time was increased from 7 hours to 8 hours. The pigment particles in the resulting mill-base had a Z-Average particle size of 106nm.

### 3.4 Black Mill-base (4)

Pigment powder (75 parts of NIPex^{RTM} 170IQ Carbon Black pigment, ex Evonik Degussa), Dispersant Aqueous Solution (4) prepared in 1.4.2 (47 parts) and water (378 parts) were mixed together to form a premixture.

The premixture was thoroughly mixed together using a Silverson^{RTM} mixer for 0.5 hours. After mixing the mixture was transferred to a horizontal bead mill containing 0.38mm beads. The mixture was then comminuted (milled) for 8 hours.

The milling beads were then separated from the milled mixture. This resulted in Black Mill-base (4). The pigment particles in the resulting mill-base had a Z-Average particle size of 106nm.

### 3.5 Black Mill-base (5)

Pigment powder (165 parts of NIPex^{RTM} 170IQ Carbon Black pigment, ex Evonik Degussa), Dispersant Aqueous Solution (5) prepared in 1.5.2 (165 parts) and water (770 parts) were mixed together to form a premixture.

The premixture was thoroughly mixed together using a Silverson^{RTM} mixer for 1 hour. After mixing the mixture was transferred to a horizontal bead mill containing 0.38mm beads. The mixture was then comminuted (milled) for 1.1 hours.

The milling beads were then separated from the milled mixture. This resulted in Black Mill-base (5). The pigment particles in the resulting mill-base had a Z-Average particle size of 142nm.

### 3.6 Black Mill-base (6)

Black Mill-base (6) was prepared in the same way as Black mill-base (5) except that the milling time was increased from 1.1 hours to 1.4 hours. The pigment particles in the resulting mill-base had a Z-Average particle size of 134nm.

### 3.7 Black Mill-base (7)

Black Mill-base (7) was prepared in the same way as Black mill-base (5) except that the milling time was increased from 1.1 hours to 5 hours. The pigment particles in the resulting mill-base had a Z-Average particle size of 110nm.

### 3.8 Black Mill-base (8)

Pigment powder (75 parts of NIPex^{RTM} 170IQ Carbon Black pigment, ex Evonik Degussa), Dispersant Aqueous Solution (5) prepared in 1.5.2 (37.5 parts) and water (387.5 parts) were mixed together to form a premixture.

The premixture was thoroughly mixed together using a Silverson^{RTM} mixer for 5 minutes. After mixing the mixture was transferred to a horizontal bead mill containing 0.38mm beads. The mixture was then comminuted (milled) for 7 hours.

The milling beads were then separated from the milled mixture. This resulted in Black Mill-base (8). The pigment particles in the resulting mill-base had a Z-Average particle size of 98nm.

### 3.9 Black Mill-base (9)

Pigment powder (75 parts of NIPex^{RTM} 170IQ Carbon Black pigment, ex Evonik Degussa), Dispersant Aqueous Solution (6) prepared in 1.6.2 (75 parts), water (308 parts) and sulfolane (42 parts) were mixed together to form a premixture.

The premixture was thoroughly mixed together using a Silverson^{RTM} mixer for 45 minutes. After mixing the mixture was transferred to a horizontal bead mill containing 0.38mm beads. The mixture was then comminuted (milled) for 5.5 hours.

The milling beads were then separated from the milled mixture. This resulted in Black Mill-base (9). The pigment particles in the resulting mill-base had a Z-Average particle size of 147nm.

### 3.10 Black Mill-base (10)

Black Mill-base (10) was prepared in the same way as Black mill-base (9) except that the milling time was increased from 5.5 hours to 11 hours. The pigment particles in the resulting mill-base had a Z-Average particle size of 126nm.

### 3.11 Black Mill-base (11)

Pigment powder (75 parts of NIPex^{RTM} 170IQ Carbon Black pigment, ex Evonik Degussa), Dispersant Aqueous Solution (6) as prepared in 1.6.2 (75 parts), water (240 parts) and sulfolane (110 parts) were mixed together to form a premixture.

The premixture was thoroughly mixed together using a Silverson^{RTM} mixer for 45 minutes. After mixing the mixture was transferred to a horizontal bead mill containing 0.38mm beads. The mixture was then comminuted (milled) for 10 hours.

The milling beads were then separated from the milled mixture. This resulted in Black Mill-base (11). The pigment particles in the resulting mill-base had a Z-Average particle size of 133nm.

### 3.12 Black Mill-base (12)

Pigment powder (75 parts of NIPex^{RTM} 70 Carbon Black pigment, ex Evonik Degussa), Dispersant Aqueous Solution (7) prepared in 1.7.2 (75 parts) and water (350 parts) were mixed together to form a premixture.

The premixture was thoroughly mixed together using a Silverson^{RTM} mixer for 10 minutes. After mixing the mixture was transferred to a horizontal bead mill containing 0.38mm beads. The mixture was then comminuted (milled) for 6 hours.

The milling beads were then separated from the milled mixture. This resulted in Black Mill-base (12). The pigment particles in the resulting mill-base had a Z-Average particle size of 140nm.

### 3.13 Black Mill-base (13)

Black Mill-base (13) was prepared in the same way as Black mill-base (12) except that NIPex^{RTM} 160IQ (75 parts, ex Evonik degussa) was used as the pigment in place of NIPex^{RTM} 70. The pigment particles in the resulting mill-base had a Z-Average particle size of 108nm.

### 3.14 Black Mill-base (14)

Pigment powder (75 parts of NIPex^{RTM} 170IQ Carbon Black pigment, ex Evonik Degussa), Dispersant Aqueous Solution (7) as prepared in 1.7.2 (113 parts), water (240 parts) and sulfolane (60 parts) were mixed together to form a premixture.

The premixture was thoroughly mixed together using a Silverson^{RTM} mixer for 1 hour. After mixing the mixture was transferred to a horizontal bead mill containing 0.38mm beads. The mixture was then comminuted (milled) for 13 hours.

The milling beads were then separated from the milled mixture. This resulted in Black Mill-base (14). The pigment particles in the resulting mill-base had a Z-Average particle size of 123nm.

### 3.15 Black Mill-base (15)

Pigment powder (75 parts of NIPex^{RTM} 170IQ Carbon Black pigment, ex Evonik Degussa), Dispersant Aqueous Solution (7) prepared in 1.7.2 (150 parts) and water (275 parts) were mixed together to form a premixture.

The premixture was thoroughly mixed together using a Silverson^{RTM} mixer for 30 minutes. After mixing the mixture was transferred to a horizontal bead mill containing 0.38mm beads. The mixture was then comminuted (milled) for 4 hours.

The milling beads were then separated from the milled mixture. This resulted in Black Mill-base (15). The pigment particles in the resulting mill-base had a Z-Average particle size of 113nm.

### 3.16 Black Mill-base (16)

Pigment powder (75 parts of NIPex^{RTM} 170IQ Carbon Black pigment, ex Evonik Degussa), Dispersant Aqueous Solution (8) prepared in 1.8.2 (113 parts) and water (312 parts) were mixed together to form a premixture.

The premixture was thoroughly mixed together using a Silverson^{RTM} mixer for 10 minutes. After mixing the mixture was transferred to a horizontal bead mill containing 0.38mm beads. The mixture was then comminuted (milled) for 9 hours.

The milling beads were then separated from the milled mixture. This resulted in Black Mill-base (16). The pigment particles in the resulting mill-base had a Z-Average particle size of 116nm.

### 3.17 Black Mill-base (17)

Pigment powder (75 parts of NIPex^{RTM} 170IQ Carbon Black pigment, ex Evonik Degussa), Dispersant Aqueous Solution (9) prepared in 1.9.2 (75 parts) and water (350 parts) were mixed together to form a premixture.

The premixture was thoroughly mixed together using a Silverson^{RTM} mixer for 45 minutes. After mixing the mixture was transferred to a horizontal bead mill containing 0.38mm beads. The mixture was then comminuted (milled) for 12 hours.

The milling beads were then separated from the milled mixture. This resulted in Black Mill-base (17). The pigment particles in the resulting mill-base had a Z-Average particle size of 110nm.

### 3.18 Black Mill-base (18)

Pigment powder (75 parts of NIPex^{RTM} 170IQ Carbon Black pigment, ex Evonik Degussa), Dispersant Aqueous Solution (9) prepared in 1.9.2 (75 parts), water (175 parts) and dipropylene glycol (175 parts) were mixed together to form a premixture.

The premixture was thoroughly mixed together using a Silverson^{RTM} mixer for 1 hour. After mixing the mixture was transferred to a horizontal bead mill containing 0.38mm beads. The mixture was then comminuted (milled) for 6.5 hours.

The milling beads were then separated from the milled mixture. This resulted in Black Mill-base (18). The pigment particles in the resulting mill-base had a Z-Average particle size of 96nm.

### 3.19 Black Mill-base (19)

Pigment powder (75 parts of NIPex^{RTM} 170IQ Carbon Black pigment, ex Evonik Degussa), Dispersant Aqueous Solution (9) prepared in 1.9.2 (113 parts) and water (312 parts) were mixed together to form a premixture.

The premixture was thoroughly mixed together using a Silverson^{RTM} mixer for 15 minutes. After mixing the mixture was transferred to a horizontal bead mill containing 0.38mm beads. The mixture was then comminuted (milled) for 8 hours.

The milling beads were then separated from the milled mixture. This resulted in Black Mill-base (19). The pigment particles in the resulting mill-base had a Z-Average particle size of 114nm.

### 3.20 Black Mill-base (20)

Pigment powder (75 parts of NIPex^{RTM} 170IQ Carbon Black pigment, ex Evonik Degussa), Dispersant Aqueous Solution (10) prepared in 1.10.2 (75 parts) and water (350 parts) were mixed together to form a premixture.

The premixture was thoroughly mixed together using a Silverson^{RTM} mixer for 45 minutes. After mixing the mixture was transferred to a horizontal bead mill containing 0.38mm beads. The mixture was then comminuted (milled) for 7.5 hours.

The milling beads were then separated from the milled mixture. This resulted in Black Mill-base (20). The pigment particles in the resulting mill-base had a Z-Average particle size of 104nm.

### 3.21 Black Mill-base (21)

Pigment powder (75 parts of NIPex^{RTM} 170IQ Carbon Black pigment, ex Evonik Degussa), Dispersant Aqueous Solution (11) prepared in 1.11.2 (113 parts) and water (312 parts) were mixed together to form a premixture.

The premixture was thoroughly mixed together using a Silverson^{RTM} mixer for 15 minutes. After mixing the mixture was transferred to a horizontal bead mill containing 0.38mm beads. The mixture was then comminuted (milled) for 7 hours.

The milling beads were then separated from the milled mixture. This resulted in Black Mill-base (21). The pigment particles in the resulting mill-base had a Z-Average particle size of 104nm.

### 3.22 Black Mill-base (22)

Pigment powder (75 parts of NIPex^{RTM} 170IQ Carbon Black pigment, ex Evonik Degussa), Dispersant Aqueous Solution (12) prepared in 1.12.2 (75 parts) and water (350 parts) were mixed together to form a premixture.

The premixture was thoroughly mixed together using a Silverson^{RTM} mixer for 10 minutes. After mixing the mixture was transferred to a horizontal bead mill containing 0.38mm beads. The mixture was then comminuted (milled) for 8 hours.

The milling beads were then separated from the milled mixture. This resulted in Black Mill-base (22). The pigment particles in the resulting mill-base had a Z-Average particle size of 88nm.

### 3.23 Comparative Black Mill-base (1)

Pigment powder (60 parts of NIPex^{RTM} 170IQ Carbon Black pigment, ex Evonik Degussa), Comparative Dispersant Aqueous Solution (1) prepared in 2.4 (140 parts) and water (200 parts) were mixed together to form a premixture. The premixture was thoroughly mixed together using a Silverson^{RTM} mixer for 15 minutes. After mixing the mixture was transferred to a horizontal bead mill containing 0.5mm beads. The mixture was then comminuted (milled) for 6.5 hours.

The milling beads were then filtered from the milled mixture. This resulted in Comparative Black Mill-base (1). The pigment particles in the resulting mill-base had a Z-Average average particle size of 104nm.

### 3.25 Comparative Black Mill-base (2)

Pigment powder (30 parts of NIPex^{RTM} 170IQ Carbon Black pigment, ex Evonik Degussa), Comparative Dispersant Aqueous Solution (2) prepared in 1.14.2 (45 parts) and water (175 parts) were mixed together to form a premixture.

The premixture was thoroughly mixed together using a Silverson^{RTM} mixer for 10 minutes. After mixing the mixture was transferred to a horizontal bead mill containing 0.38mm beads. The mixture was then comminuted (milled) for 19 hours.

The milling beads were then separated from the milled mixture. This resulted in Comparative Black Mill-base (2). The pigment particles in the resulting mill-base had a Z-Average particle size of 112nm.

### 4. Cross-linking the polyurethane dispersant to prepare the encapsulated pigment dispersions

### 4.1 Cross-linking of the polyurethane dispersant

All the mill-bases prepared above in points 3.1 to 3.24 were adjusted to a pigment content of about either 5% or 10% by weight by the addition of water.

The dispersants in each of the mill-bases were then cross-linked using a cross-linking agent, either polyglycerol polyglycidyl ether (Denacol^{RTM} EX-521 obtained from Nagase ChemteX, with weight per epoxy = 181, hereafter abbreviated as EX-521), trimethylolpropane polyglycidyl ether (Denacol EX-321^{RTM} obtained from Nagase ChemteX, with weight per epoxy = 140, hereafter abbreviated as EX-321) or sorbitol polyglycidyl ether (Denacol^{RTM} EX-614B obtained from Nagase ChemteX, with weight per epoxy = 173, hereafter abbreviated as EX-614B). This cross-linked some of the carboxylic acid groups in the dispersant and thereby encapsulated the pigment. The cross-linking reaction was performed in the presence of boric acid (obtained from Aldrich). In each case a mixture was prepared containing the amounts of the components as specified in Table 1. The cross-linking reaction was effected by heating the above described mixture to a temperature of about 65°C for 5 hours. This prepared a range of different Encapsulated pigment dispersions with the references as indicated in column 1 of Table 1.

**Table 1: Encapsulated pigment dispersions**

| Encapsulated Pigment Dispersion reference | Mill-base used | Mill-base pigment content (%) | Mill-base (parts) | Crosslinker (parts) | Boric acid (parts) |
|---|---|---|---|---|---|
| Encapsulated Black Dispersion (1) | Black Mill-base (1) | 10 | 50 | EX-321 (0.084) | 0.031 |
| Encapsulated Black Dispersion (2) | Black Mill-base (2) | 10 | 50 | EX-321 (0.103) | 0.031 |
| Encapsulated Black Dispersion (3) | Black Mill-base (2) | 10 | 50 | EX-521 (0.106) | 0.032 |
| Encapsulated Black Dispersion (4) | Black Mill-base (3) | 10 | 50 | EX-321 (0.098) | 0.035 |
| Encapsulated Black Dispersion (5) | Black Mill-base (3) | 10 | 50 | EX-521 (0.096) | 0.031 |
| Encapsulated Black Dispersion (6) | Black Mill-base (4) | 10 | 380 | EX-321 (0.80) | 0.35 |
| Encapsulated Black Dispersion (7) | Black Mill-base (5) | 10 | 75 | EX-521 (0.32) | 0.093 |
| Encapsulated Black Dispersion (8) | Black Mill-base (6) | 10 | 45 | EX-321 (0.13) | 0.056 |
| Encapsulated Black Dispersion (9) | Black Mill-base (7) | 10 | 75 | EX-521 (0.32) | 0.093 |
| Encapsulated Black Dispersion (10) | Black Mill-base (7) | 10 | 60 | EX-614B (0.10) | 0.037 |
| Encapsulated Black Dispersion (11) | Black Mill-base (7) | 10 | 60 | EX-321 (0.084) | 0.037 |
| Encapsulated Black Dispersion (12) | Black Mill-base (7) | 10 | 60 | EX-614B (0.21) | 0.074 |
| Encapsulated Black Dispersion (13) | Black Mill-base (8) | 10 | 75 | EX-321 (0.053) | 0.023 |
| Encapsulated Black Dispersion (14) | Black Mill-base (8) | 10 | 75 | EX-521 (0.080) | 0.023 |
| Encapsulated Black Dispersion (15) | Black Mill-base (9) | 5 | 150 | EX-321 (0.049) | 0.022 |
| Encapsulated Black Dispersion (16) | Black Mill-base (9) | 5 | 150 | EX-321 (0.098) | 0.043 |
| Encapsulated Black Dispersion (17) | Black Mill-base (10) | 10 | 110 | EX-321 (0.077) | 0.034 |
| Encapsulated Black Dispersion (18) | Black Mill-base (11) | 10 | 110 | EX-321 (0.077) | 0.034 |
| Encapsulated Black Dispersion (19) | Black Mill-base (11) | 10 | 110 | EX-321 (0.154) | 0.068 |
| Encapsulated Black Dispersion (20) | Black Mill-base (12) | 5 | 230 | EX-321 (0.168) | 0.074 |
| Encapsulated Black Dispersion (21) | Black Mill-base (13) | 5 | 230 | EX-321 (0.168) | 0.074 |
| Encapsulated Black Dispersion (22) | Black Mill-base (14) | 5 | 190 | EX-321 (0.090) | 0.040 |
| Encapsulated Black Dispersion (23) | Black Mill-base (14) | 5 | 190 | EX-321 (0.181) | 0.080 |
| Encapsulated Black Dispersion (24) | Black Mill-base (14) | 5 | 190 | EX-521 (0.139) | 0.040 |
| Encapsulated Black Dispersion (25) | Black Mill-base (14) | 5 | 190 | EX-614B (0.216) | 0.080 |
| Encapsulated Black Dispersion (26) | Black Mill-base (15) | 5 | 240 | EX-321 (0.336) | 0.148 |
| Encapsulated Black Dispersion (27) | Black Mill-base (16) | 5 | 140 | EX-321 (0.032) | 0.014 |
| Encapsulated Black Dispersion (28) | Black Mill-base (17) | 5 | 220 | EX-321 (0.161) | 0.071 |
| Encapsulated Black Dispersion (29) | Black Mill-base (18) | 5 | 200 | EX-321 (0.078) | 0.035 |
| Encapsulated Black Dispersion (30) | Black Mill-base (18) | 5 | 200 | EX-321 (0.157) | 0.069 |
| Encapsulated Black Dispersion (31) | Black Mill-base (19) | 5 | 190 | EX-321 (0.191) | 0.084 |
| Encapsulated Black Dispersion (32) | Black Mill-base (20) | 5 | 150 | EX-321 (0.105) | 0.046 |
| Encapsulated Black Dispersion (33) | Black Mill-base (21) | 5 | 200 | EX-321 (0.113) | 0.050 |
| Encapsulated Black Dispersion (34) | Black Mill-base (22) | 5 | 180 | EX-321 (0.193) | 0.085 |
| Comparative Encapsulated Black Dispersion (1) | Comparative Black Mill-base (1) | 10 | 70 | EX-321 (0.360) | 0.159 |
| Comparative Encapsulated Black Dispersion (2) | Comparative Black Mill-base (2) | 5 | 100 | EX-321 (0.067) | 0.030 |

### 5. Ultrafiltration

The Encapsulated pigment dispersions prepared above in 4.1 were each purified by means of ultrafiltration using membrane having a molecular weight cut off of 50kD. The Encapsulated pigment dispersions were diafiltered with approximately 6 wash volumes of pure deionized water per 1 volume of the Encapsulated pigment dispersion. The ultrafiltration membrane was then used to concentrate the encapsulated dispersion back to a solids content of around 10 to 15% by weight.

### 6. Preparation of Comparative Self-Dispersible Pigment Dispersions

### 6.1 Comparative Self-Dispersible Black Pigment Dispersion (1)

A Comparative Pigment Dispersion comprising a self-dispersible pigment surface-functionalised with carboxylic acid groups was prepared as follows.

A solution of NaNO₂ (2.3g, 33.3mmol) in water (5mL) was added over 5 minutes to a cooled (5°C), stirred suspension of 4-aminobenzoic acid (4.5g, 33mmol) in a mixture of water (45mL) and c. HCl (8.5mL). The mixture was stirred at 0-5°C for 1 hour and then added in one portion to a cooled (<5°C), stirred suspension of NiPex^{RTM} 170IQ carbon black pigment (50g). The reaction mixture was stirred, whilst gradually warming to room temperature. The reaction mixture was adjusted to pH 9.6 using aqueous KOH and the suspension was homogenised (Ultraturrax^{RTM}).

The reaction mixture was dialysed to a conductivity of less than 50 microScm⁻¹ and treated with ultrasound (Branson Digital Sonifier) at 5°C for 1 hour. The dispersion was concentrated in an oven at 60°C to give a pigment content of about 10-15% by weight. The resulting dispersion was designated as Comparative Self-Dispersible Black pigment Dispersion (1).

The pigment particles in the resulting dispersion had an Mv average particle size of 150nm. The Mv average particle size was established for all dispersions using a Nanotrac 150 obtained from Honeywell-Microtrac.

### 6.2 Comparative Self-Dispersible Black Pigment Dispersion (2)

A Comparative Pigment Dispersion comprising a pigment made self-dispersible by surface oxidation was prepared as follows.

A slurry of NIPex^{RTM} 170IQ carbon black pigment (20g) and water (90 mL) was added to a stirred suspension of potassium persulphate (33g) in water (90 mL). The mixture was warmed up to 43°C and stirred vigorously for 30 minutes. Concentrated sulphuric acid (11.5g) was added sub-surface to the reaction mixture over 20 seconds. Gas was evolved immediately and the mixture was stirred and heated at 55°C overnight. The reaction mixture was allowed to cool down to 25°C and the pH was adjusted to 9.5 with concentrated potassium hydroxide. The reaction mixture was dialysed to a conductivity of less than 50 microScm⁻¹ and concentrated using a rotary evaporator to give a pigment content of approximately 10-15% by weight. The particle size of the resulting dispersion was further reduced by treating with ultrasound (Branson Digital Sonifier) at 5°C for 1 hour. The dispersion was designated as Comparative Self-Dispersible Black pigment Dispersion (2).

The pigment particles in the resulting dispersion had an Mv average particle size of 107nm.

### 7. Preparation of Inks and Comparative Inks

Each of the above pigment dispersions prepared in 5. and 6., were used to prepare an Ink or Comparative ink having the following composition.

**Ink Vehicle**

| Pigment dispersion | X parts |
|---|---|
| 2-Pyrrolidone | 3.00 parts |
| Glycerol | 15.00 parts |
| 1,2 Hexane diol | 4.00 parts |
| Ethylene glycol | 5.00 parts |
| Surfynol™ 465 | 0.50 parts |
| Pure water | sufficient to make 100 parts |

| | |
|---|---|
| Surfynol^{RTM} 465 is a surfactant available from Airproducts. | |

### X parts of encapsulated pigments dispersion

6 parts of black pigment on an active or solids basis were used in all cases (approximately 60 parts of Encapsulated pigment dispersion when the solids content is 10% by weight).

Using the above ink composition, for example, Encapsulated Black Dispersion (1) was used to prepare Black Ink (1). The exact correspondence of references is outlined fully in Table 2.

**Table 2**

| Ink | Encapsulated Pigment Dispersion |
|---|---|
| Black Ink (1) | Encapsulated Black Dispersion (1) |
| Black Ink (2) | Encapsulated Black Dispersion (2) |
| Black Ink (3) | Encapsulated Black Dispersion (3) |
| Black Ink (4) | Encapsulated Black Dispersion (4) |
| Black Ink (5) | Encapsulated Black Dispersion (5) |
| Black Ink (6) | Encapsulated Black Dispersion (6) |
| Black Ink (7) | Encapsulated Black Dispersion (7) |
| Black Ink (8) | Encapsulated Black Dispersion (8) |
| Black Ink (9) | Encapsulated Black Dispersion (9) |
| Black Ink (10) | Encapsulated Black Dispersion (10) |
| Black Ink (11) | Encapsulated Black Dispersion (11) |
| Black Ink (12) | Encapsulated Black Dispersion (12) |
| Black Ink (13) | Encapsulated Black Dispersion (13) |
| Black Ink (14) | Encapsulated Black Dispersion (14) |
| Black Ink (15) | Encapsulated Black Dispersion (15) |
| Black Ink (16) | Encapsulated Black Dispersion (16) |
| Black Ink (17) | Encapsulated Black Dispersion (17) |
| Black Ink (18) | Encapsulated Black Dispersion (18) |
| Black Ink (19) | Encapsulated Black Dispersion (19) |
| Black Ink (20) | Encapsulated Black Dispersion (20) |
| Black Ink (21) | Encapsulated Black Dispersion (21) |
| Black Ink (22) | Encapsulated Black Dispersion (22) |
| Black Ink (23) | Encapsulated Black Dispersion (23) |
| Black Ink (24) | Encapsulated Black Dispersion (24) |
| Black Ink (25) | Encapsulated Black Dispersion (25) |
| Black Ink (26) | Encapsulated Black Dispersion (26) |
| Black Ink (27) | Encapsulated Black Dispersion (27) |
| Black Ink (28) | Encapsulated Black Dispersion (28) |
| Black Ink (29) | Encapsulated Black Dispersion (29) |
| Black Ink (30) | Encapsulated Black Dispersion (30) |
| Black Ink (31) | Encapsulated Black Dispersion (31) |
| Black Ink (32) | Encapsulated Black Dispersion (32) |
| Black Ink (33) | Encapsulated Black Dispersion (33) |
| Black Ink (34) | Encapsulated Black Dispersion (34) |
| Comparative Black Ink (1) | Comparative Self-Dispersible Black Pigment Dispersion (1) |
| Comparative Black Ink (2) | Comparative Self-Dispersible Black Pigment Dispersion (2) |
| Comparative Black Ink (3) | Comparative Encapsulated Black Dispersion (1) |
| Comparative Black Ink (4) | Comparative Encapsulated Black Dispersion (2) |

### 8. Preparation of prints

Each of the Inks and Comparative Inks described above in point 7 were printed onto plain (untreated) paper, namely Canon GF500 paper. Printing was performed by means of an Epson SX100 series ink jet printer printing 100% blocks of black. Immediately after printing, a wet rub test was carried out by wiping either a damp gloved finger or a blank highlighter pen nib soaked in water from the centre of one block across an unprinted portion of the paper.

### 9. Measurement of Optical Density and Wet Rub

For each print the reflectance optical density (ROD) was measured using a Gretag Macbeth key wizard V2.5 Spectrolino photodensitometer instrument, illuminated using a D65 light source at an observer angle of 2° and with no filter fitted. Measurements were taken at at least two points along the print and were then averaged.

Wet Rub (WR) measurements were carried out by measuring the ROD of the smudge formed in the WR test on the unprinted paper, at a position immediately adjacent to the printed block. A high value for the WR test indicates undesirable transfer of the ink from the printed to the unprinted portion of the paper.

### 10. Results of Optical Density Measurements

The results of the ROD and WR measurements are summarised below in Table 3.

**Table 3: Prints obtained from Inks and Comparative Inks**

| Ink | Dispersant | ROD | WR |
|---|---|---|---|
| Black Ink (1) | Dispersant (1) | 1.25 | 0.08 |
| Black Ink (2) | Dispersant (2) | 1.23 | 0.08 |
| Black Ink (3) | Dispersant (2) | 1.25 | 0.08 |
| Black Ink (4) | Dispersant (3) | 1.24 | No data |
| Black Ink (5) | Dispersant (3) | 1.22 | No data |
| Black Ink (6) | Dispersant (4) | 1.20 | 0.11 |
| Black Ink (7) | Dispersant (5) | 1.25 | 0.11 |
| Black Ink (8) | Dispersant (5) | 1.28 | 0.13 |
| Black Ink (9) | Dispersant (5) | 1.20 | 0.11 |
| Black Ink (10) | Dispersant (5) | 1.20 | 0.12 |
| Black Ink (11) | Dispersant (5) | 1.24 | 0.11 |
| Black Ink (12) | Dispersant (5) | 1.23 | 0.12 |
| Black Ink (13) | Dispersant (5) | 1.26 | 0.12 |
| Black Ink (14) | Dispersant (5) | 1.23 | 0.13 |
| Black Ink (15) | Dispersant (6) | 1.30 | 0.11 |
| Black Ink (16) | Dispersant (6) | 1.32 | 0.10 |
| Black Ink (17) | Dispersant (6) | 1.30 | 0.11 |
| Black Ink (18) | Dispersant (6) | 1.27 | 0.09 |
| Black Ink (19) | Dispersant (6) | 1.26 | 0.10 |
| Black Ink (20) | Dispersant (7) | 1.28 | 0.13 |
| Black Ink (21) | Dispersant (7) | 1.30 | 0.10 |
| Black Ink (22) | Dispersant (7) | 1.27 | 0.13 |
| Black Ink (23) | Dispersant (7) | 1.27 | 0.12 |
| Black Ink (24) | Dispersant (7) | 1.26 | 0.12 |
| Black Ink (25) | Dispersant (7) | 1.26 | 0.13 |
| Black Ink (26) | Dispersant (7) | 1.27 | 0.14 |
| Black Ink (27) | Dispersant (8) | 1.30 | 0.13 |
| Black Ink (28) | Dispersant (9) | 1.25 | 0.12 |
| Black Ink (29) | Dispersant (9) | 1.25 | 0.12 |
| Black Ink (30) | Dispersant (9) | 1.25 | 0.12 |
| Black Ink (31) | Dispersant (9) | 1.29 | 0.13 |
| Black Ink (32) | Dispersant (10) | 1.23 | 0.13 |
| Black Ink (33) | Dispersant (11) | 1.20 | 0.13 |
| Black Ink (34) | Dispersant (12) | 1.22 | 0.13 |
| Comparative Black Ink (1) | Self-dispersible pigment | 1.18 | 0.27 |
| Comparative Black Ink (2) | Self-dispersible pigment | 1.25 | 0.17 |
| Comparative Black Ink (3) | Comparative Dispersant (1) | 1.10 | 0.08 |
| Comparative Black Ink (4) | Comparative Dispersant (2) | 1.16 | 0.10 |

From Table 3, it can readily be seen that the Encapsulated solid dispersions prepared by the process according to the first aspect of the present invention can be used to prepare ink jet printing inks which provide especially good reflectance optical density (ROD) and wet rub fastness (WR) in combination when printed onto plain paper. In contrast the comparative inks have either good ROD or good WR but not both.

### 11. Further inks

The further inks described in Tables I and II may be prepared wherein Black Mill-base (1), (2) and (3) are as defined above and the ink additives are as defined below. Numbers quoted in the second column onwards refer to the number of parts of the relevant ingredient and all parts are by weight. The inks may be applied to paper by thermal, piezo or Memjet ink jet printing.

The following abbreviations are used in Table I and II:
PG = propylene glycol
DEG = diethylene glycol
NMP = N-methyl pyrrolidone
DMK = dimethylketone
IPA = isopropanol
MEOH = methanol
2P = 2-pyrrolidone
MIBK = methylisobutyl ketone
P12 = propane-1,2-diol
BDL = butane-2,3-diol
Surf = Surfynol™ 465 from Airproducts
PHO Na₂HPO₄ and
TBT = tertiary butanol
TDG = thiodiglycol
GLY = Glycerol
nBDPG = mono-n-butyl ether of dipropylene glycol
nBDEG = mono-n-butyl ether of diethylene glycol
nBTEG = mono-n-butyl ether of triethylene glycol

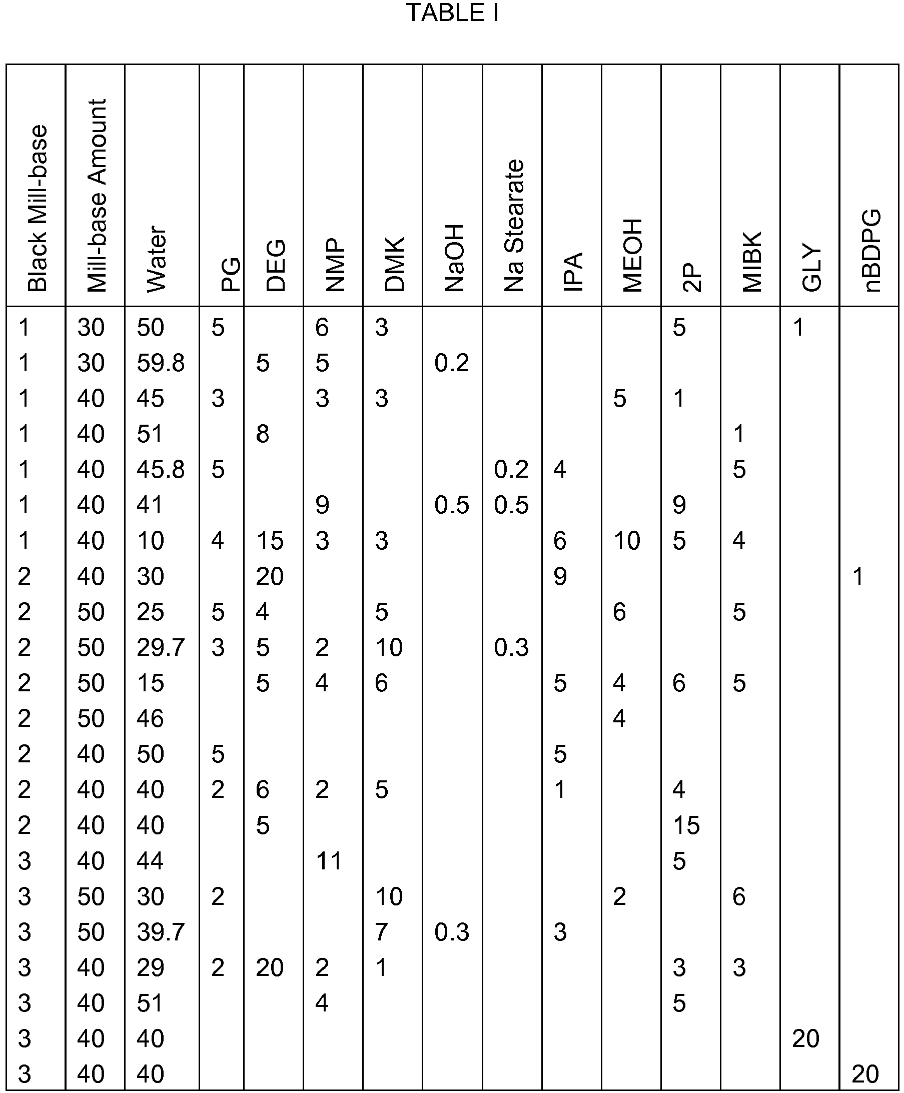

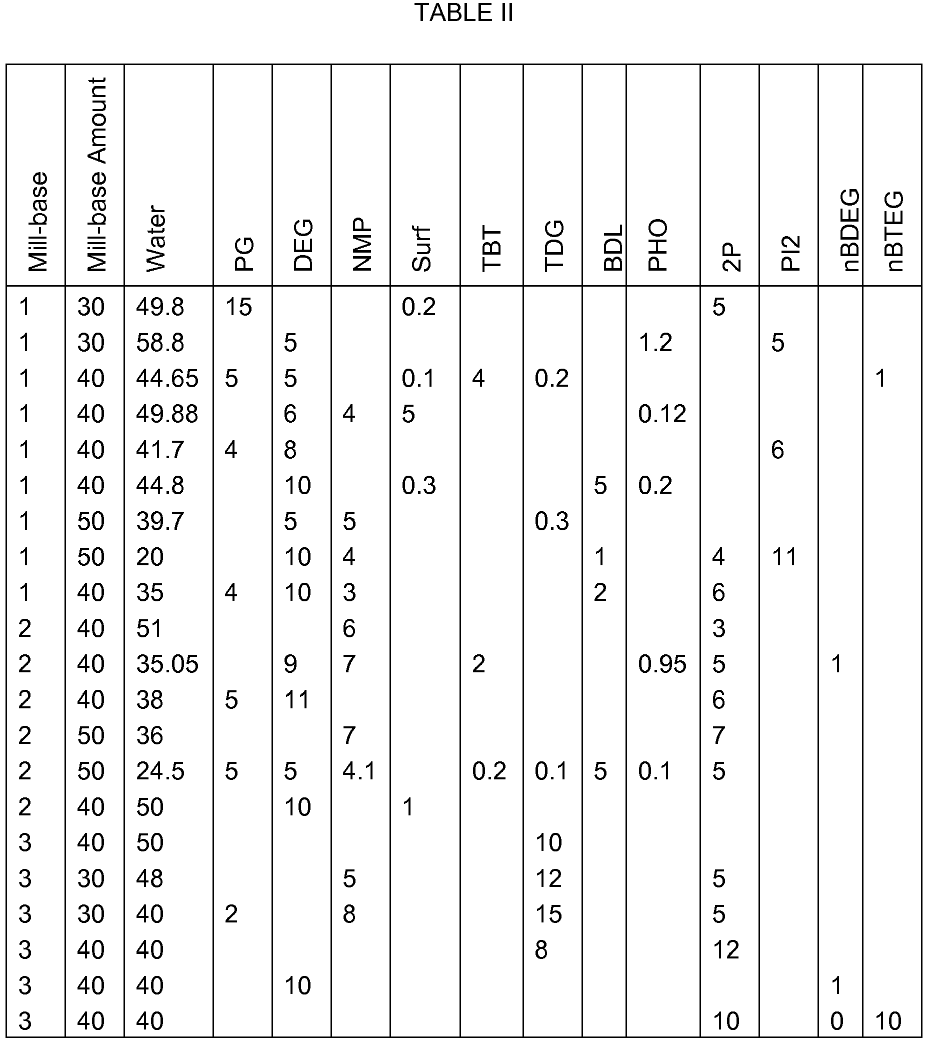

## Claims

1. A process for preparing a dispersion of encapsulated solid particles in a liquid medium comprising:
i) comminuting a composition comprising a solid, a liquid medium and a polyurethane dispersant having an acid value of from 1.0 to 2.0 mmoles per g of dispersant, said composition comprising from 5 to 40 parts of polyurethane dispersant per 100 parts of solid, the parts being by weight; and
ii) cross-linking the polyurethane dispersant in the presence of the solid and a liquid medium so as to encapsulate the solid particles;
wherein the polyurethane dispersant contains less than 10% by weight of repeat units from polymeric alcohols, each polymeric alcohol having a number averaged molecular weight of more than 500 daltons.

2. A process according to claim 1 wherein the acid value of the polyurethane dispersant is from 1.0 to 1.5 mmoles per g of dispersant.

3. A process according to any one of the preceding claims wherein the comminution composition in step i) comprises from 15 to 40 parts of polyurethane dispersant per 100 parts of solid.

4. A process according to any one of the preceding claims wherein the comminution composition in step i) comprises from 15 to 25 parts of polyurethane dispersant per 100 parts of solid.

5. A process according to any one of the preceding claims wherein in step i) the composition comprises less than 1 part of polymeric dispersant other than a polyurethane dispersant per 10 parts of polyurethane dispersant, wherein all parts are by weight.

6. A process according to any one of the preceding claims wherein the liquid medium is or comprises water.

7. A process according to any one of the preceding claims wherein during step i) the liquid medium comprises water and less than 10% by weight of one or more water miscible organic liquids based on the total liquid medium.

8. A process according to any one of the preceding claims wherein the polyurethane dispersant contains less than 1% by weight of repeat units from polymeric alcohols, each polymeric alcohol having a number averaged molecular weight of more than 500 daltons.

9. A process according to any one of the preceding claims wherein the polyurethane dispersant is obtained by reacting:
i) at least one diisocyanate selected from ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate;
iia) at least one diol selected from trimethylene glycol, ethyleneglycol, propylene glycol, 1,4-butane diol, 1,5-pentanediol, 1,6-hexanediol, neopentyl glycol, diethylene glycol, dipropylene glycol, 1,2-propylene glycol, 1,4-cyclohexanedimethylol, 1,4-cyclohexanediol, 1,4-bis(2-hydroxyethoxy) benzene, bis(2-hydroxyethyl)terephthalate, paraxylylenediol, glycerol monoester, cyclohexanedimethanol, ethyleneoxide and propylene oxide extended hydrogenated bisphenol A, polyetherdiol, polylesterdiol and polycarbonate diol; and
iib) at least one dihydroxy alkanoic acid;
iii) optionally a chain extending agent; and
iv) optionally an end-capping agent.

10. A process according to any one of the preceding claims wherein prior to cross-linking the polyurethane dispersant has a number average molecular weight of from 10,000 to 50,000 g per mole.

11. A process according to any one of the preceding claims wherein the solid is a pigment.

12. A process according to claim 11 for preparing an ink further comprising the step of adding one or more ink additives selected from viscosity modifiers, pH buffers, corrosion inhibitors, biocides, dyes, further pigments, kogation reducing additives, chelating agents, binders and water miscible organic liquids.

13. A dispersion obtained or obtainable by a process according to any one of claims 1 to 11.

14. An ink jet printer ink comprising a dispersion according to claim 13.

15. An ink jet printer cartridge comprising a chamber and an ink according to claim 14, wherein the ink is in the chamber.

## Patentansprüche

1. Verfahren zur Herstellung einer Dispersion von verkapselten festen Teilchen in einem flüssigen Medium, das Folgendes umfasst:
i) Zerkleinern einer Zusammensetzung, die einen Feststoff, ein flüssiges Medium und ein Polyurethan-Dispergiermittel mit einer Säurezahl von 1,0 bis 2,0 mmol pro g Dispergiermittel umfasst, wobei die Zusammensetzung 5 bis 40 Teile Polyurethan-Dispergiermittel pro 100 Teile Feststoff umfasst, wobei sich die Teile auf das Gewicht beziehen; und
ii) Vernetzen des Polyurethan-Dispergiermittels in Gegenwart des Feststoffs und eines flüssigen Mediums zur Verkapselung der festen Teilchen;
wobei das Polyurethan-Dispergiermittel weniger als 10 Gew.-% Wiederholungseinheiten von polymeren Alkoholen enthält, wobei jeder polymere Alkohol ein zahlenmittleres Molekulargewicht von mehr als 500 Dalton aufweist.

2. Verfahren nach Anspruch 1, bei dem die Säurezahl des Polyurethan-Dispergiermittels 1,0 bis 1,5 mmol pro g Dispergiermittel beträgt.

3. Verfahren nach einem der vorhergehenden Ansprüche, bei dem die Zerkleinerungszusammensetzung in Schritt i) 15 bis 40 Teile Polyurethan-Dispergiermittel pro 100 Teile Feststoff umfasst.

4. Verfahren nach einem der vorhergehenden Ansprüche, bei dem die Zerkleinerungszusammensetzung in Schritt i) 15 bis 25 Teile Polyurethan-Dispergiermittel pro 100 Teile Feststoff umfasst.

5. Verfahren nach einem der vorhergehenden Ansprüche, bei dem in Schritt i) die Zusammensetzung weniger als 1 Teil polymeres Dispergiermittel, das von einem Polyurethan-Dispergiermittel verschieden ist, pro 10 Teile Polyurethan-Dispergiermittel umfasst, wobei sich alle Teile auf das Gewicht beziehen.

6. Verfahren nach einem der vorhergehenden Ansprüche, bei dem das flüssige Medium Wasser ist oder umfasst.

7. Verfahren nach einem der vorhergehenden Ansprüche, bei dem während Schritt i) das flüssige Medium Wasser und weniger als 10 Gew.-% einer oder mehrerer wassermischbarer organischer Flüssigkeiten, bezogen auf das gesamte flüssige Medium, umfasst.

8. Verfahren nach einem der vorhergehenden Ansprüche, bei dem das Polyurethan-Dispergiermittel weniger als 1 Gew.-% Wiederholungseinheiten von polymeren Alkoholen enthält, wobei jeder polymere Alkohol ein zahlenmittleres Molekulargewicht von mehr als 500 Dalton aufweist.

9. Verfahren nach einem der vorhergehenden Ansprüche, bei dem das Polyurethan-Dispergiermittel durch Umsetzen von
i) mindestens einem Diisocyanat, das aus Ethylendiisocyanat, 1,6-Hexamethylendiisocyanat, Isophorondiisocyanat, Tetramethylxyloldiisocyanat, 1,4-Phenylendiisocyanat, 2,4-Toluoldiisocyanat, 2,6-Toluoldiisocyanat, 4,4'-Diphenylmethandiisocyanat und dessen hydriertem Derivat, 2,4'-Diphenylmethandiisocyanat und dessen hydriertem Derivat und 1,5-Naphthylendiisocyanat ausgewählt ist;
iia) mindestens einem Diol, das aus Trimethylenglykol, Ethylenglykol, Propylenglykol, 1,4-Butandiol, 1,5-Pentandiol, 1,6-Hexandiol, Neopentylglykol, Diethylenglykol, Dipropylenglykol, 1,2-Propylenglykol, 1,4-Cyclohexandimethylol, 1,4-Cyclohexandiol, 1,4-Bis(2-hydroxyethoxy)benzol, Bis (2-hydroxyethyl)terephthalat, para-Xylylendiol, Glycerinmonoester, Cyclohexandimethanol, mit Ethylenoxid und Propylenoxid verlängertem hydriertem Bisphenol A, Polyetherdiol, Polyesterdiol und Polycarbonatdiol ausgewählt ist; und
iib) mindestens einer Dihydroxyalkansäure;
iii) gegebenenfalls einem Kettenverlängerungsmittel und
iv) gegebenenfalls einem Endgruppenverschlussmittel
erhalten wird.

10. Verfahren nach einem der vorhergehenden Ansprüche, bei dem das Polyurethan-Dispergiermittel vor der Vernetzung ein zahlenmittleres Molekulargewicht von 10.000 bis 50.000 g pro mol aufweist.

11. Verfahren nach einem der vorhergehenden Ansprüche, bei dem es sich bei dem Feststoff um ein Pigment handelt.

12. Verfahren nach Anspruch 11 zur Herstellung einer Tinte, ferner umfassend den Schritt des Zugebens eines oder mehrerer Tintenadditive, die aus Viskositätsmodifikatoren, pH-Puffersubstanzen, Korrosionsinhibitoren, Bioziden, Farbstoffen, weiteren Pigmenten, kogationsvermindernden Additiven, Chelatbildnern, Bindemitteln und wassermischbaren organischen Flüssigkeiten ausgewählt sind.

13. Dispersion, erhalten oder erhältlich durch ein Verfahren nach einem der Ansprüche 1 bis 11.

14. Tintenstrahldruckertinte, umfassend eine Dispersion nach Anspruch 13.

15. Tintenstrahldruckerpatrone, umfassend eine Kammer und eine Tinte nach Anspruch 14, wobei sich die Tinte in der Kammer befindet.

## Revendications

1. Procédé de préparation d'une dispersion de particules solides encapsulées dans un milieu liquide comprenant :
i) le broyage d'une composition comprenant un solide, un milieu liquide et un dispersant au polyuréthane ayant un indice d'acide de 1,0 à 2,0 mmol par g de dispersant, ladite composition comprenant de 5 à 40 parties de dispersant au polyuréthane pour 100 parties de solide, les parties étant en poids ; et
ii) la réticulation du dispersant au polyuréthane en présence du solide et d'un milieu liquide de manière à encapsuler les particules solides ;
dans lequel le dispersant au polyuréthane contient moins de 10 % en poids de motifs répétitifs dérivés d'alcools polymères, chaque alcool polymère ayant un poids moléculaire moyen en nombre de plus de 500 daltons.

2. Procédé selon la revendication 1 dans lequel l'indice d'acide du dispersant au polyuréthane est de 1,0 à 1,5 mmol par g de dispersant.

3. Procédé selon l'une quelconque des revendications précédentes dans lequel la composition de broyage à l'étape i) comprend de 15 à 40 parties de dispersant au polyuréthane pour 100 parties de solide.

4. Procédé selon l'une quelconque des revendications précédentes dans lequel la composition de broyage à l'étape i) comprend de 15 à 25 parties de dispersant au polyuréthane pour 100 parties de solide.

5. Procédé selon l'une quelconque des revendications précédentes dans lequel à l'étape i) la composition comprend moins de 1 partie d'un autre dispersant polymère qu'un dispersant au polyuréthane pour 10 parties de dispersant au polyuréthane, toutes les parties étant en poids.

6. Procédé selon l'une quelconque des revendications précédentes dans lequel le milieu liquide est ou comprend de l'eau.

7. Procédé selon l'une quelconque des revendications précédentes dans lequel pendant l'étape i) le milieu liquide comprend de l'eau et moins de 10 % en poids d'un ou plusieurs liquides organiques miscibles à l'eau, rapporté au milieu liquide total.

8. Procédé selon l'une quelconque des revendications précédentes dans lequel le dispersant au polyuréthane contient moins de 1 % en poids de motifs répétitifs dérivés d'alcools polymères, chaque alcool polymère ayant un poids moléculaire moyen en nombre de plus de 500 daltons.

9. Procédé selon l'une quelconque des revendications précédentes dans lequel le dispersant au polyuréthane est obtenu en faisant réagit :
i) au moins un diisocyanate choisi parmi le diisocyanate d'éthylène, le diisocyanate de 1,6-hexaméthylène, le diisocyanate d'isophorone, le diisocyanate de tétraméthylxylène, le diisocyanate de 1,4-phénylène, le diisocyanate de 2,4-toluène, le diisocyanate de 2,6-toluène, le diisocyanate de 4,4'-diphénylméthane et son dérivé hydrogéné, le diisocyanate de 2,4'-diphénylméthane et son dérivé hydrogéné, et le diisocyanate de 1,5-naphtylène ;
iia) au moins un diol choisi parmi le triméthylène glycol, l'éthylène glycol, le propylène glycol, le 1,4-butanediol, le 1,5-pentanediol, le 1,6-hexanediol, le néopentylglycol, le diéthylène glycol, le dipropylène glycol, le 1,2-propylène glycol, le 1,4-cyclohexanediméthylol, le 1,4-cyclohexanediol, le 1,4-bis(2-hydroxyéthoxy)benzène, le bis(2-hydroxyéthoxy)-téréphtalate, le paraxylylènediol, le monoester de glycérol, le cyclohexanediméthanol, le bisphénol A hydrogéné étendu à l'oxyde d'éthylène et l'oxyde de propylène, le polyétherdiol, le polyesterdiol et le polycarbonatediol ; et
iib) au moins un acide dihydroxyalcanoïque ;
iii) éventuellement un agent d'allongement de chaîne ; et
iv) éventuellement un agent de coiffage des extrémités.

10. Procédé selon l'une quelconque des revendications précédentes dans lequel avant réticulation le dispersant au polyuréthane a un poids moléculaire moyen en nombre de 10 000 à 50 000 g par mole.

11. Procédé selon l'une quelconque des revendications précédentes dans lequel le solide est un pigment.

12. Procédé selon la revendication 11 pour la préparation d'une encre comprenant en outre l'étape consistant à ajouter un ou plusieurs additifs pour encres choisis parmi les modificateurs de viscosité, les tampons de pH, les inhibiteurs de corrosion, les biocides, les colorants, les autres pigments, les additifs réduisant la kogation, les chélateurs, les liants et les liquides organiques miscibles à l'eau.

13. Dispersion obtenue ou pouvant être obtenue par un procédé selon l'une quelconque des revendications 1 à 11.

14. Encre pour imprimante à jet d'encre comprenant une dispersion selon la revendication 13.

15. Cartouche d'imprimante à jet d'encre comprenant une chambre et une encre selon la revendication 14, l'encre étant dans la chambre.
